# EUROPÄISCHE PATENTSCHRIFT

(11) **EP 3 867 109 B1**
(45) Veröffentlichungstag und Bekanntmachung des Hinweises auf die Patenterteilung: **21.02.2024**
(21) Anmeldenummer: 19779880.4
(22) Anmeldetag: 30.09.2019
(51) Int. Cl.: B60S 1/48, B05B 1/16, B05B 1/30, B05B 12/06, B60S 1/52, B60S 1/54, B60S 1/56, B05B 1/08, B05B 7/08, B08B 5/02, B05B 1/00, B05B 12/04

(54) **REINIGUNGSVORRICHTUNG, DRUCKLUFTSYSTEM, REINIGUNGSVERFAHREN**
CLEANING DEVICE, COMPRESSED AIR SYSTEM, CLEANING METHOD
DISPOSITIF DE NETTOYAGE, SYSTÈME D'AIR COMPRIMÉ, PROCÉDÉ DE NETTOYAGE

(30) Priorität: 19.10.2018 DE 102018126090
(43) Veröffentlichungstag der Anmeldung: 25.08.2021
(73) Patentinhaber: ZF CV Systems Europe BV, 1170 Brussels (BE)
(72) Erfinder: FIEBRANDT, Jan, 31812 Bad Pyrmont (DE); WESTERKAMP, Helge, 30966 Hemmingen (DE)
(74) Vertreter: Rabe, Dirk-Heinrich
(86) Internationale Anmeldenummer: PCT/EP2019/076401
(87) Internationale Veröffentlichungsnummer: WO 2020/078702

(56) Entgegenhaltungen:
- WO-A1-2019/086158
- DE-A1-102016 107 380
- US-A1- 2017 313 286

## Beschreibung

Die Erfindung betrifft eine Reinigungsvorrichtung gemäß dem Oberbegriff des Anspruchs 1. Die Erfindung betrifft auch ein Druckluftsystem gemäß dem Anspruch 16 und ein Reinigungsverfahren gemäß dem Anspruch 22.

Reinigungsvorrichtungen, insbesondere zum Reinigen von Sensoren in Fahrzeugen, sind allgemein bekannt.

Eine eingangs beschriebene Reinigungsvorrichtung ist in DE10 2015 013203 A1 offenbart. Diese beschreibt eine Reinigungseinheit für eine zur Umgebungserfassung vorgesehene Bilderfassungseinheit eines Fahrzeugs, mit zumindest einer Wischwasserdüse, die dazu vorgesehen ist, Wischwasser auf eine transparente Abdeckfläche der Bilderfassungseinheit zu sprühen, mit zumindest einem Wischer, der dazu vorgesehen ist, die Abdeckfläche der Bilderfassungseinheit mechanisch zu trocknen, und mit zumindest einer Druckluftdüse, die dazu vorgesehen ist, die Abdeckfläche der Bilderfassungseinheit mit Druckluft zu beaufschlagen.

Das Konzept ist noch verbesserungswürdig, insbesondere hinsichtlich der Abhängigkeit der Reinigung von einem mechanischen Wischer.

Die WO 2019/086158 A1 wird als Stand der Technik gemäß Art. 54(3) EPÜ genannt.

Die US 9,707,896 B2 beschreibt ein Sichtsystem für ein Fahrzeug umfassend eine Kamera mit einem Bildwandler und ein Objektiv. Die Kamera befindet sich an einem äußeren Teil eines Fahrzeugs und hat ein Sichtfeld außerhalb des Fahrzeugs. Ein Luftströmungselement weist eine Einlassöffnung und eine Auslassöffnung auf, wobei die Auslassöffnung so konfiguriert ist, dass sie den Luftstrom vor die Linse lenkt, um den Schmutz weg von der Linse zu leiten. Die Auslassöffnung ist so konfiguriert, dass sie den Luftstrom mit einer Geschwindigkeit lenkt, die größer ist als eine Luftströmungsgeschwindigkeit, die in den Einlassanschluss fließt. Die Einlassöffnung kann einen Einlassbereich aufweisen, der wesentlich größer als ein Auslassbereich des Auslassanschlusses ist. Das System kann eine Luftstromerzeugungsvorrichtung zum Erzeugen oder Verstärken des Luftstroms durch die Luftströmungsvorrichtung umfassen. Dieses Konzept realisiert somit einen Luftvorhang zum Schutz eines Sensors gegen äußere Einflüsse, und ist somit noch verbesserungswürdig, insbesondere hinsichtlich der Reinigung des Sensors.

Die US2017313286A1 offenbart ein System zum Reinigen einer externen fahrzeugmontierten Sensoroberfläche. Das System umfasst eine Luftdüse, die so angeordnet ist, dass sie Luft auf eine Sensoroberfläche abgibt; eine Luftpumpe mit einem Fluideinlass, einem Luftauslass, einer Luft-Fluid-Schnittstelle und einer Kompressionskammer mit variablem Volumen, die mit dem Luftauslass in Verbindung steht; eine Luftstromsteuervorrichtung, die mit der Luftdüse und dem Luftauslass verbunden ist, um den Luftstrom dadurch zu steuern; und eine Flüssigkeitspumpe, die mit dem Fluideinlass verbunden ist, um einen Strom von unter Druck stehender Flüssigkeit zuzuführen, so dass das Volumen der Kompressionskammer variiert, um ein Volumen von unter Druck stehender Luft mit einem absoluten Druck unter 10 bar zu erzeugen.

Die DE102016107380A1 offenbart eine Reinigungsanlage für einen fahrzeugeigenen optischen Sensor beinhaltet eine Waschanlagenpumpe, die eine Reinigungsflüssigkeit zuführt, eine Luftpumpe, ein Düsenelement und eine Steuereinheit. Die Luftpumpe beinhaltet ein Auslassventil und gibt Luft durch das Auslassventil aus. Das Auslassventil öffnet sich, wenn Luft in der Luftpumpe verdichtet wird. Das Düsenelement hat eine Ausstoßöffnung, die ein Gas-Flüssigkeits-Gemisch zu einer Sensorfläche eines fahrzeugeigenen optischen Sensors hin ausstößt, um Fremdstoffe von der Sensorfläche zu entfernen. Die Reinigungsflüssigkeit aus der Waschanlagenpumpe und die Luft aus der Luftpumpe sind im Gas-Flüssigkeits-Gemisch vermischt. Die Steuereinheit steuert die Waschanlagenpumpe und die Luftpumpe. Die Steuereinheit ist so konfiguriert, dass das Gas-Flüssigkeits-Gemisch ausgestoßen wird, indem die Reinigungsflüssigkeit im Düsenelement gespeichert wird, um die Ausstoßöffnung zu bedecken, und dann die Luft dem Düsenelement zugeführt wird.

Wünschenswert ist es, eine zuverlässige und gründliche Reinigung zu gewährleisten, insbesondere unter relativ geringem, insbesondere apparativen, Aufwand. Weiterhin ist ein geringer Verbrauch von Energie und Reinigungsmedien wünschenswert, sowie ein robuster, insbesondere möglichst wartungsarmer, Aufbau.

An dieser Stelle setzt die Erfindung an, deren Aufgabe es ist, in verbesserter Weise eine Reinigungsvorrichtung anzugeben, welche die oben adressierten Probleme zumindest teilweise behebt.

Insbesondere soll ein hohes Maß an Zuverlässigkeit und Gründlichkeit bei der Reinigung erreicht werden, und der apparative Aufwand sowie der Aufwand hinsichtlich Wartung einer Reinigungsvorrichtung reduziert werden. Auch soll ein relativ geringer Verbrauch von Energie und Reinigungsmedien erreicht werden.

Die Aufgabe, betreffend die Reinigungsvorrichtung, wird durch die Erfindung mit einer Reinigungsvorrichtung des Anspruchs 1 gelöst. Die Erfindung geht aus von einer Reinigungsvorrichtung zum Beaufschlagen einer Oberfläche mit einer Mediumssequenz aus mindestens einem ersten Medium und einem zweiten Medium, aufweisend eine Düse, ausgebildet zum Beaufschlagen der Oberfläche mit dem zweiten Medium und ein Reinigungsventil mit einem Halteanschluss, einem Druckanschluss, einem Stempel und einem Druckauslass.

Erfindungsgemäß ist bei der Reinigungsvorrichtung vorgesehen, dass der Druckauslass ausgebildet ist zum impulsartigen Beaufschlagen der Oberfläche mit dem ersten Medium und ein Hochdruckspeicher ausgebildet ist zum Speichern des, insbesondere mit einem Speicherdruck beaufschlagten, ersten Mediums, sowie ein Schaltventil vorgesehen ist zum selektiven Herstellen einer Verbindung zwischen einer ersten Mediumszuleitung mit einer mit dem Halteanschluss verbundenen Halteleitung.

Bei der Reinigungsvorrichtung ist insbesondere vorgesehen, dass der Druckauslass und die Düse ausgebildet sind, die Oberfläche mit der Mediumssequenz impulsartig zu beaufschlagen.

Die Erfindung geht von der Überlegung aus, dass es generell vorteilhaft ist, den Aufwand bei der Reinigung von Oberflächen, insbesondere den apparativen Aufwand und den Verbrauch von Energie und Reinigungsmedien möglichst gering zu halten, ohne dabei jedoch die Reinigungswirkung einzuschränken. Dies trifft insbesondere auf die Reinigung von Oberflächen eines Sensors oder einer Sensorabdeckung zu, für die eine saubere Oberfläche eine Voraussetzung für die ordnungsgemäße und zuverlässige Funktionsweise des Sensors ist.

Die Erfindung basiert auf der Erkenntnis, dass die Beaufschlagung einer zu reinigenden Fläche mit einer Mediumssequenz, insbesondere einer Abfolge von mindestens zwei intermittierend und/oder abwechselnd gesteuerten und in jeweils einem Strahl auf die Oberfläche geleiteten Medien, insbesondere in der Art einer oder mehrerer Pulse, zu einer relativ hohen Reinigungswirkung führt. Insbesondere hat die Erfindung erkannt, dass hierbei eine Abfolge eines Beaufschlagens mit einem Reinigungsmittel, gefolgt von einem Beaufschlagen mit einem oder mehreren Druckluftpulsen, zu einer verbesserten Reinigungswirkung führt, insbesondere verglichen mit ausschließlich auf Druckluft oder ausschließlich auf Flüssigkeit basierenden Reinigungsverfahren. Auch entsteht im Vergleich zu kontinuierlich beaufschlagenden Systemen der Vorteil, dass Energie und Reinigungsmedien eingespart werden können.

Der Begriff "impulsartig" bezeichnet im Zusammenhang der Erfindung eine plötzlich, ruckartige Beaufschlagung einer Oberfläche mit einem Medium, deren Impuls insbesondere geeignet ist, auf der Oberfläche befindliche Partikel, insbesondere Dreckpartikel, zu lösen und/oder zu entfernen. Generell wird dabei die Reinigungswirkung des Impulses unter anderem durch eine relativ hohe Masse des Mediums, eine relativ hohe Aufprallgeschwindigkeit des Mediums auf die Oberfläche und ein relativ schnelles Auslösen der Beaufschlagung vorteilhaft erhöht. Ein relativ schnelles Auslösen der Beaufschlagung führt - insbesondere im Gegensatz zu einer langsam kontinuierlich ansteigenden Strömung des Mediums - zu einem Auftreffen insbesondere einer begrenzten, in einem Speicher gespeicherten Luftmasse auf die Oberfläche in einem relativ kurzen Zeitraum. Somit wird vorteilhaft ein hoher Impuls erreicht.

Die Erfindung hat dabei weiter erkannt, dass bei einer Beaufschlagung mit einer derartigen Mediumssequenz die Reinigungswirkung mindestens ausreichend - verglichen mit anderen, insbesondere ausschließlich auf Druckluft oder ausschließlich auf Flüssigkeit basierenden Reinigungsverfahren sogar besser - sein kann, sodass insbesondere die Abhängigkeit von einem mechanischen Reinigungsgerät, wie z. B. einem Wischer oder dergleichen mit der zu reinigenden Oberfläche in Kontakt stehenden Gerät, verringert werden kann, oder sogar vollständig auf ein derartiges mechanisches Reinigungsgerät verzichtet werden kann. Hierdurch wird vorteilhaft die Anzahl bewegter und verschleißbehafteter Teile verringert und somit die Robustheit erhöht, sowie die Herstellungskosten und die Fehleranfälligkeit der Reinigungsvorrichtung verringert. Eine Mediumssequenz bezeichnet in dem Zusammenhang der Erfindung eine Abfolge von einem oder mehreren Beaufschlagungen im Rahmen eines Reinigungsvorgangs. Besonders bevorzugt weist eine Mediumssequenz eine oder mehrere, insbesondere impulsartige, Beaufschlagungen mit einem ersten Medium, insbesondere Druckluft, und eine oder mehrere Beaufschlagungen mit einem zweiten Medium, insbesondere Wasser, auf.

Die Erfindung führt zur Lösung der Aufgabe auch auf ein Druckluftsystem, aufweisend mindestens einen Sensor, wobei der Sensor oder eine insbesondere transparente Abdeckung des Sensors eine Oberfläche aufweist, mindestens eine Reinigungsvorrichtung nach dem Konzept der Erfindung, wobei eine erste Mediumsquelle des Druckluftsystems über eine erste Mediumszuleitung mit der mindestens einen Reinigungsvorrichtung verbindbar ist, und eine zweite Mediumsquelle über eine zweite Mediumszuleitung mit der mindestens einen Reinigungsvorrichtung verbindbar ist.

Die Erfindung führt zur Lösung der Aufgabe auch auf ein Reinigungsverfahren zum Reinigen einer Oberfläche, aufweisend die Schritte: Aufladen eines Hochdruckspeichers mit einem ersten Medium, insbesondere Luft; Halten eines Speicherdrucks im Hochdruckspeicher, insbesondere durch Halten eines Haltedrucks am Halteanschluss des Reinigungsventils, insbesondere durch Schalten des Schaltventils in eine Haltestellung; Beaufschlagen der Oberfläche mit einem zweiten Medium, insbesondere Wasser oder einem Reinigungsmittel; Beaufschlagen der Oberfläche mit dem ersten Medium, insbesondere durch Lösen des Haltedrucks am Halteanschluss, insbesondere durch Schalten des Schaltventils in eine Lösestellung.

In einer Weiterbildung des Reinigungsverfahrens ist vorgesehen, dass das Beaufschlagen der Oberfläche mit dem zweiten Medium und das Beaufschlagen der Oberfläche mit dem ersten Medium zeitlich gesteuert, insbesondere abwechselnd und/oder intermittierend, erfolgt. Dies kann insbesondere konkret beinhalten, dass einzelne Beaufschlagungen oder Mediumssequenzen beliebig und insbesondere nach Bedarf wiederholt oder miteinander kombiniert werden. Beispielsweise kann ein abwechselndes Beaufschlagen von einem ersten Medium und einem zweiten Medium, insbesondere ein abwechselndes Beaufschlagen von Druckluft und Reinigungsflüssigkeit zum Erreichen einer gewünschten oder erforderlichen Reinigungswirkung vorteilhaft sein. Auch ist es weiterhin möglich, die Anzahl der Wiederholungen einer einzelnen Beaufschlagung oder einer Mediumssequenz festzulegen, beispielsweise drei oder fünf Wiederholungen. Auch ist es möglich, in einer Beaufschlagung oder Mediumssequenz ausschließlich nur mit einem Medium zu beaufschlagen, beispielsweise ausschließlich mit Druckluft oder ausschließlich mit Wasser oder Reinigungsflüssigkeit.

Auch ist es in einer Weiterbildung vorteilhaft möglich, eine einzelne Beaufschlagung oder eine Mediumssequenz in Abhängigkeit der erreichten Reinigungswirkung und/oder der auf der Oberfläche verbleibenden Partikel zu wiederholen. So kann beispielsweise ein Messwert des der Oberfläche zugeordneten Sensors als Abbruchkriterium für die Wiederholungen dienen. Hierzu kommt beispielsweise ein Helligkeitswert eines optischen Sensors in Frage, der sich mit einem zunehmenden Entfernen von Partikeln von der Oberfläche erhöht oder ein Referenzbild, welches mit zunehmendem Entfernen von Partikeln von der Oberfläche eine erhöhte Übereinstimmung mit dem von dem optischen Sensor aufgenommenen Kamerabild aufweist.

Beim erfindungsgemäßen Druckluftsystem werden die Vorteile der Vorrichtung vorteilhaft genutzt. Insbesondere sind der geringere apparative Aufwand und die geringere Abhängigkeit von mechanischen bewegten Teilen, wie z. B. Wischer vorteilhaft für Anwendungen in Fahrzeugen und dergleichen, insbesondere mobilen, Maschinen. Auch wirken sich bei einem Einsatz des erfindungsgemäßen Druckluftsystems in einem Fahrzeug der geringere Verbrauch von Energie und Reinigungsmedien vorteilhaft aus, da Energie und Reinigungsmedien in Fahrzeugen und vergleichbaren mobilen Systemen nur begrenzt vorhanden sind. Auch ist in einem Fahrzeug der Aspekt einer zuverlässigen Reinigung wichtig, da zu reinigende Sensoren häufig kritische und sicherheitsrelevante Aufgaben übernehmen.

Beim erfindungsgemäßen Reinigungsverfahren werden die Vorteile der Vorrichtung ebenfalls, analog zur Reinigungsvorrichtung und zum Druckluftsystem, vorteilhaft genutzt.

Vorteilhafte Weiterbildungen der Erfindung sind den Unteransprüchen zu entnehmen und geben im Einzelnen vorteilhafte Möglichkeiten an, das oben erläuterte Konzept im Rahmen der Aufgabenstellung sowie hinsichtlich weiterer Vorteile zu realisieren.

Insbesondere ist vorgesehen, dass die Reinigungsvorrichtung, insbesondere durch ein Steuermodul, dazu ausgebildet ist, die Oberfläche mit dem ersten Medium und/oder mit dem zweiten Medium selektiv, insbesondere einzeln, gleichzeitig oder abwechselnd, zu beaufschlagen. Dies kann insbesondere beinhalten, dass das Schaltventil oder die Schaltventile derart angesteuert werden können, dass in steuerbarer Weise eine Mediumssequenz, insbesondere durch eine zeitlich koordinierte Ansteuerung des Schaltventils oder der Schaltventile, erzeugt wird. Hierzu können - je nach Voreinstellung und/oder Bedarf - einzelne Beaufschlagungen oder Mediumssequenzen wiederholt und/oder verschiedene Beaufschlagungen oder Mediumssequenzen kombiniert werden. Insbesondere ist es auch möglich, Beaufschlagungen oder Mediumssequenzen mit ausschließlich einem Medium zu veranlassen, bspw. nur mit Druckluft oder nur mit Wasser oder Reinigungsflüssigkeit. Das Steuermodul kann dabei als Teil der Reinigungsvorrichtung ausgebildet sein oder auch in anderer Form realisiert werden, beispielsweise als Teil einer übergeordneten Steuerung, insbesondere als Teil eines Steuerungsbusses oder dergleichen elektronischen Steuerungssystems.

Insbesondere ist vorgesehen, dass die Reinigungsvorrichtung ausgebildet ist, die Zusammensetzung und Abfolge der Mediumssequenz zeitlich, insbesondere abwechselnd und/oder intermittierend, zu steuern. Dies kann konkret insbesondere durch ein Ansteuern des ersten und des zweiten Schaltventils erfolgen. Durch eine zeitlich gesteuerte Beaufschlagung kann vorteilhaft in Abhängigkeit von Verschmutzungsgrad, Umgebungsbedingungen und Betriebsparametern eine optimale Reinigung der Oberfläche erreicht werden. Abwechselnd bedeutet insbesondere, dass zu einem Zweitpunkt immer nur ein Medium auf die Oberfläche beaufschlagt wird. Konkret bedeutet dies insbesondere, dass die Beaufschlagung des einen, beispielsweise ersten Mediums, vollständig unterbrochen wird, und dann mit der Beaufschlagung des anderen, beispielsweise zweiten Mediums, begonnen wird und umgekehrt erst nach Unterbrechen des der Beaufschlagung des zweiten Mediums wieder mit der Beaufschlagung durch das erste Medium fortgefahren wird. Zwischen den Beaufschlagungen können, insbesondere auch innerhalb einer Mediumssequenz, definierte Pausen liegen, beispielsweise um Dreckpartikel einzuweichen.

Intermittierend bedeutet insbesondere, dass die jeweiligen Mediumsströme, insbesondere die Ströme des ersten Mediums und des zweiten Mediums, jeweils ausgelöst und unterbrochen werden. Dabei können auch zwei Medien gleichzeitig auf die Oberfläche beaufschlagt werden. Beispielsweise kann die Oberfläche während einer Mediumssequenz kontinuierlich mit Wasser, also dem zweiten Medium, beaufschlagt werden, während ein oder mehrere Druckluftimpulse - also die Beaufschlagung mit dem ersten Medium - ausgelöst werden.

Vorteilhaft ist vorgesehen, dass das Reinigungsventil als Schnellentlüftungsventil ausgebildet ist. Durch den Einsatz eines Schnellentlüftungsventils kann insbesondere auf relativ einfache konstruktive Weise ein impulsartiges Beaufschlagen der Oberfläche mit dem ersten Medium, insbesondere Druckluft, erreicht werden. Durch das impulsartige Beaufschlagen wird vorteilhaft eine relativ hohe Reinigungsleistung erreicht. Auch kann - im Sinne einer Vorsteuerung - mit einem Schnellentlüftungsventil vorteilhaft ein relativ großer Massenstrom, insbesondere Luftmassenstrom, mit einem relativ geringen Haltedruck geschaltet werden. Es kann, in synergetischem Zusammenwirken des Schnellentlüftungsventils mit dem Hochdruckspeicher, der Hochdruckspeicher mit einem relativ geringen Luftmassenstrom über einen längeren Zeitraum befüllt werden, und anschließend in einem relativ kurzen Zeitraum entleert werden, indem ein großer Luftmassenstrom durch den Druckauslass des Schnellentlüftungsventils geleitet wird. Durch einen kurzzeitigen, insbesondere plötzlichen, jedoch großen Luftmassenstrom wird ein hoher Impuls erzeugt, der beim Auftreffen auf die Oberfläche entsteht, wodurch eine hohe Reinigungsleistung erreicht wird.

Insbesondere ist vorgesehen, dass das Reinigungsventil einen beweglichen Stempel, insbesondere zum Auslösen einer impulsartigen Strömung des ersten Mediums, aufweist, wobei der Stempel über einen am Halteanschluss anliegenden Haltedruck steuerbar ist. Auch hierbei kann analog zu der vorangegangen beschriebenen Weiterbildung - im Sinne einer Vorsteuerung - mit einem Schnellentlüftungsventil vorteilhaft ein relativ großer Massenstrom, insbesondere Luftmassenstrom, mit einem relativ geringen Haltedruck geschaltet werden. Durch die Tatsache, dass die auf der Seite der Haltekammer mit dem Haltedruck beaufschlagte Fläche größer ist als die auf der Seite der Einlasskammer, kann der Stempel mit einem relativ geringen Haltedruck geschlossen werden, und beim Öffnen des Stempels dennoch ein relativ großer Massenstrom impulsartig über den Druckauslass auf die Oberfläche geleitet werden.

Im Rahmen einer bevorzugten Weiterbildung ist vorgesehen, dass der Stempel einseitig durchlässig ausgebildet ist, insbesondere eine Strömung des ersten Mediums vom Halteanschluss zum Druckanschluss zulässt und in Gegenrichtung sperrt. Dies bedeutet konkret insbesondere, dass der Stempel vorteilhaft als Rückschlagventil wirken kann, und insbesondere in dem Fall, dass am Halteanschluss ein höherer Druck herrscht als am Druckanschluss, eine Strömung des ersten Mediums zulässt. Hierzu kann der Stempel eine auf einer Einlasskammer zugewandten Seite eine Ringaussparung und/oder eine im Wesentlichen am Außenumfang des Stempels verlaufende Dichtlippe aufweisen. Durch derartige Merkmale wird vorteilhaft eine Nachgiebigkeit des Stempels erreicht, welche eine Strömung eines Mediums in eine Richtung zulässt und in die entgegengesetzte Richtung sperrt.

Der Begriff "einseitig durchlässig" muss in diesem Zusammenhang nicht bedeuten, dass der Stempel selbst durchlässig ist, sondern beispielsweise durch seine Verformbarkeit eine Strömung in eine Richtung an sich selbst, das heißt an dem Stempel, vorbei zulässt und in die Gegenrichtung sperrt. Eine derartige Durchlässigkeit entsteht also nicht durch ein durchlässiges Material, sondern durch die Verformbarkeit und einen dadurch entstehenden Spalt zwischen Stempel und einem an den Stempel angrenzenden Bauteil, beispielsweise einer Innenwand des Reinigungsventils und/oder insbesondere der Innenwand der Haltekammer.

In einer derartigen Weiterbildung mit einem einseitig durchlässigen Stempel kann der Stempel vorteilhaft sowohl die Funktion der Speicherleitung als auch des als Rückschlagventil wirkenden Hochdruckspeicher-Halteventils übernehmen. Die Reinigungsvorrichtung wird insbesondere aufgrund der Tatsache, dass diese Komponenten eingespart werden können, vorteilhaft kompakter. Auch können in einer solchen Weiterbildung vorteilhaft Druckluftverluste verringert werden.

Im Rahmen einer bevorzugten Weiterbildung ist vorgesehen, dass der Hochdruckspeicher mit der Halteleitung verbunden ist, insbesondere über eine Speicherabzweigung und eine Speicherleitung. Konkret bedeutet dies insbesondere, dass der Hochdruckspeicher über die Halteleitung befüllt werden kann. Somit kann die Abhängigkeit von weiteren Leitungen verringert und die Komplexität der Reinigungsvorrichtung vorteilhaft reduziert werden. Diese Weiterbildung nutzt vorteilhaft die Tatsache, dass die Halteleitung zwecks Schließen des Reinigungsventils ohnehin unter einem Haltedruck gehalten werden muss und nutzt diesen zur Verfügung stehenden Druck zum Füllen des Hochdruckspeichers.

Im Rahmen einer bevorzugten Weiterbildung ist vorgesehen, dass ein Hochdruckspeicher-Halteventil in der Speicherleitung angeordnet ist, wobei das Hochdruckspeicher-Halteventil insbesondere als gegen eine Befüllungsrichtung des Hochdruckspeichers sperrendes Rückschlagventil ausgebildet ist. Durch ein derartiges Hochdruckspeicher-Halteventil wird insbesondere vorteilhaft erreicht, dass bei einem Schalten des ersten Schaltventils in eine Lösestellung das im Hochdruckspeicher gespeicherte erste Medium nicht über die Speicherleitung entweicht, sondern in den Druckanschluss des Reinigungsventils strömt.

Vorteilhaft ist vorgesehen, dass der Druckauslass ausgebildet ist, das erste Medium praktisch entlang einer ersten Strahlachse auf die Oberfläche zu leiten.

Konkret bedeutet dies insbesondere, dass das erste Medium in reproduzierbarer Weise an eine Stelle oder einen Bereich der Oberfläche geleitet wird, der gereinigt werden soll. Hierzu ist der Druckauslass insbesondere im Sinne einer Düse symmetrisch um die erste Strahlachse ausgebildet und ausgerichtet.

Insbesondere ist vorgesehen, dass die Düse ausgebildet ist, das zweite Medium praktisch entlang einer zweiten Strahlachse auf die Oberfläche zu leiten. Konkret bedeutet dies insbesondere, dass das zweite Medium in reproduzierbarer Weise an eine Stelle oder einen Bereich der Oberfläche geleitet wird, der gereinigt werden soll. Hierzu ist die Düse insbesondere symmetrisch um die zweite Strahlachse ausgebildet und ausgerichtet.

Im Rahmen einer bevorzugten Weiterbildung ist vorgesehen, dass sich erste Strahlachse und die zweite Strahlachse auf der Oberfläche in einem Zielbereich schneiden. Dies bedeutet konkret insbesondere, dass das erste Medium und das zweite Medium an einem gemeinsamen Ort oder einem Bereich auf der Oberfläche auftreffen und diese somit zum Erreichen der vorteilhaften Reinigungswirkung gemäß dem Konzept der Erfindung zusammenwirken können. Gleichwohl ist es ebenso möglich, die beiden Strahlachsen derartig auszurichten, dass sie die Oberfläche in einem definierten Abstand schneiden. Somit können etwaige Umgebungsbedingungen, insbesondere der auf ein Fahrzeug und somit auf den Sensor wirkende Fahrtwind und/oder die Trägheit der einzelnen Medien, berücksichtigt werden, um dennoch ein annäherndes örtliches Zusammentreffen beider Medien auf der Oberfläche innerhalb eines Zielbereiches zu gewährleisten.

Insbesondere ist vorgesehen, dass der Hochdruckspeicher ein Fassungsvermögen von 0 cl bis 20 cl, bevorzugt 1 cl bis 10 cl, besonders bevorzugt 3 cl bis 7 cl aufweist. Durch das Fassungsvermögen des Hochdruckspeichers wird insbesondere - zusammen mit dem Druck des im Hochdruckspeicher gespeicherten ersten Mediums, insbesondere dem Haltedruck - die Dauer und die Intensität des Reinigungsimpulses des ersten Mediums festgelegt.

Im Rahmen einer bevorzugten Weiterbildung ist vorgesehen, dass die Reinigungsvorrichtung als eine bauliche Einheit in Form eines Reinigungsmoduls, insbesondere der Hochdruckspeicher in oder unmittelbar an dem Reinigungsventil angeordnet ist. Diese Weise kann eine kompakte und robuste Bauweise der Reinigungsvorrichtung erreicht werden, und diese somit insbesondere vorteilhaft möglichst nah an der zu reinigenden Oberfläche positioniert werden. Auch wird durch eine derartige Bauform vorteilhaft erreicht, dass das zu speichernde Medium kürzere Wege zurücklegen muss und somit die Druckverluste verringert werden und der Impuls, der durch das beaufschlagte Medium erzeugt wird, erhöht wird. Insbesondere wird in einer derartigen Weiterbildung erreicht, dass das Verhältnis aus Nutzvolumen zu Verlustvolumen vorteilhaft erhöht wird. Als Nutzvolumen ist hierbei das Speichervolumen des Hochdruckspeichers zu verstehen, als Verlustvolumen das Volumen der Leitungen zwischen Hochdruckspeicher zu Reinigungsventil. Auch kann durch einen modularen Charakter eines Reinigungsmoduls der Austausch des Reinigungsmoduls und somit die Reparatur vereinfacht werden.

Insbesondere ist vorgesehen, dass die Düse über eine Zuführungsleitung versorgt wird, wobei die Zuführungsleitung über ein zweites Schaltventil mit einer zweiten Mediumszuleitung verbunden ist. Konkret bedeutet dies, dass die Beaufschlagung der Oberfläche mit dem zweiten Medium gesteuert werden kann, indem mittels des zweiten Schaltventils die Zuführung des zweiten Mediums zur Düse beeinflusst werden kann. Insbesondere kann das zweite Schaltventil als Magnetventil ausgebildet sein.

Erfindungsgemäß ist eine als ein Ventilspeichermodul ausgebildete Ventilspeicheranordnung vorgesehen, welche mindestens das Reinigungsventil und den Hochdruckspeicher umfasst. Vorteilhaft ist der Hochdruckspeicher in das Ventilspeichermodul integriert. Erfindungsgemäß ist das Ventilspeichermodul zweiteilig, aus einem Modulinnenteil und einem Modulaußenteil, aufgebaut.

Vorteilhaft kann weiter eine Moduldüsenspitze, insbesondere wechselbar, in einen Wechselanschluss am Druckauslass des Modulaußenteils eingesetzt werden.

Eine derartige Bildung mit einem Ventilspeichermodul hat mehrere Vorteile. Erstens erlaubt der in das Ventilspeichermodul integrierte Hochdruckspeicher eine kompakte Bauweise der Reinigungsvorrichtung, was insbesondere bei Fahrzeugen zwecks Einsparung von Gewicht und Bauraum von Vorteil ist. Insbesondere lässt sich so eine Vielzahl von Sensoren mit einer entsprechenden Anzahl von Reinigungsvorrichtungen mit Vorteil realisieren.

Der Hochdruckspeicher ist vorteilhaft in das Ventilspeichermodul integriert und somit räumlich nah am Druckauslass angeordnet. Dadurch wird als zweiter Vorteil erreicht, dass das erste Medium, insbesondere die Druckluft, beim Lösen des Modulstempels nur einen relativ kurzen Weg zum Druckauslass zurücklegen muss. Dadurch wird vorteilhaft eine schnelle Reaktionszeit erreicht. Mit einer schnellen Reaktionszeit geht insbesondere eine nur kurze Verzögerung zwischen dem Lösen des Haltedrucks am Modulanschluss und dem impulsartigen Beaufschlagen der zu reinigenden Oberfläche einher.

Drittens ermöglicht der Hochdruckspeicher stets die Bereitstellung einer konstanten Menge des ersten Mediums, insbesondere der Druckluft. Dies wird aufgrund des integrierten Hochdruckspeichers ohne aufwendige Mess- und Regelungstechnik realisiert. Dies gewährleistet das konstante Volumen des Hochdruckspeichers und die Funktionsweise des Entleerens des Hochdruckspeichers lediglich durch das Bewegen des Modulstempels im Sinne eines Schnellentlüftungsventils. Auf diese Weise wird stets ein definiertes Volumen über den Druckauslass bereitgestellt.

Viertens wird -trotz der Integration des Hochdruckspeichers in das Ventilspeichermodul- auch in dieser Weiterbildung eine pneumatische oder hydraulische Entkopplung der Reinigungsvorrichtung von einer - insbesondere zentralen - Mediumsquelle, beispielsweise von einer Druckluftversorgung und/oder einem Kompressor eines Fahrzeugs, erreicht. Somit steht nach Aufladen des Hochdruckspeichers der für einen Reinigungsimpuls notwendige Speicherdruck zur Verfügung, unabhängig von der Verfügbarkeit der zentralen Mediumsquelle.

Erfindungsgemäß ist vorgesehen, dass der Druckauslass einen Wechselanschluss aufweist zum auswechselbaren Aufnehmen einer Moduldüsenspitze. Die lösbare Verbindung über einen Wechselanschluss ermöglicht vorteilhaft ein Auswechseln der Moduldüsenspitze. Erfindungsgemäß können hierdurch verschiedene Moduldüsenspitzen eingesetzt werden. Beispielsweise kann durch die gezielte Anpassung des Durchmessers einer Spitzenpassage die Geschwindigkeit des durch den Druckauslass nach außen tretenden Mediums verändert werden. Entsprechend kann beispielsweise mit einem relativ geringen Durchmesser der Spitzenpassage, beispielsweise einem Durchmesser von 2 mm, eine höhere Austrittsgeschwindigkeit als bei einem Durchmesser von beispielsweise 4 mm erreicht werden. Auf diese Weise kann insbesondere der Reinigungsimpuls erhöht werden. Auch wird durch die Möglichkeit des Abnehmens der Moduldüsenspitze ein verbesserter Zugang zum Druckauslass, insbesondere zwecks Wartung oder Reinigung des Speicherventilmoduls, erreicht.

In einer Weiterbildung des Druckluftsystems ist vorgesehen, dass die erste Mediumsquelle einem anderen Primärzweck dient, insbesondere der Versorgung einer Luftfederanlage oder dergleichen Pneumatikanlage. In einer derartigen Weiterbildung kann vorteilhaft eine bereits vorhandene Mediumsquelle, insbesondere Druckluftquelle, zur Versorgung der Reinigungsvorrichtung genutzt werden. Dies ist insbesondere bei einem Einsatz in einem Fahrzeug oder dergleichen mobilen System vorteilhaft, da die Anzahl der benötigten Komponenten reduziert wird und somit Gewicht, Kosten und Energie eingespart werden können.

In einer Weiterbildung des Druckluftsystems ist vorgesehen, dass die zweite Mediumsquelle einem anderen Primärzweck dient, insbesondere der Versorgung einer Scheibenreinigungsanlage oder dergleichen Reinigungsanlage. In einer derartigen Weiterbildung kann vorteilhaft eine bereits vorhandene Mediumsquelle, insbesondere Flüssigkeits- und/oder Reinigungsmittelquelle, zur Versorgung der Reinigungsvorrichtung genutzt werden. Dies ist insbesondere bei einem Einsatz in einem Fahrzeug oder dergleichen mobilen System vorteilhaft, da die Anzahl der benötigten Komponenten reduziert wird und somit Gewicht, Kosten und Energie eingespart werden können.

In einer Weiterbildung des Druckluftsystems ist vorgesehen, dass der Sensor ein optischer Sensor, insbesondere ein Umgebungserfassungssensor ist. In einer derartigen Weiterbildung ist eine Reinigungsvorrichtung gemäß dem Konzept der Erfindung insbesondere vorteilhaft, da die regelmäßige Reinigung der Sensoroberfläche die Funktionsweise des Sensors verbessert, insbesondere, weil die optischen Eigenschaften des Sensors von der Transparenz und/oder Transluzenz der Sensoroberfläche abhängen.

In einer Weiterbildung des Druckluftsystems ist vorgesehen, dass die erste Mediumsquelle eine Verdichteranordnung und/oder einen Druckluftspeicher aufweist, insbesondere die Verdichteranordnung in dem Druckluftspeicher angeordnet ist. Hierdurch wird insbesondere vorteilhaft eine kompakte Bauform des Druckluftsystems erreicht.

In einer Weiterbildung des Druckluftsystems ist vorgesehen, dass das Druckluftsystem mindestens ein Zuleitungs-Rückschlagventil, insbesondere in der ersten Mediumszuleitung und/oder einer ersten Quellenleitung, aufweist. In einer solchen Weiterbildung wird insbesondere vorteilhaft erreicht, dass die von einer Verdichteranordnung erzeugte Druckluft, bei Leckagen oder dergleichen zu einem Druckverlust führenden Undichtigkeiten, die sich in Förderrichtung vor dem Ventil befinden, nicht über diese Undichtigkeiten entweichen kann. Dies ist insbesondere der Fall, da mindestens eine Zuleitungs-Rückschlagventil in diese, der Förderrichtung entgegengesetzten Strömungsrichtung sperrt und somit insbesondere der Haltedruck in dem Teil des Druckluftsystems, der sich in Förderrichtung hinter dem Ventil befindet, gehalten werden kann.

Ausführungsformen der Erfindung werden nun nachfolgend anhand der Zeichnung beschrieben. Diese soll die Ausführungsformen nicht notwendigerweise maßstäblich darstellen, vielmehr ist die Zeichnung, wo zur Erläuterung dienlich, in schematisierter und/oder leicht verzerrter Form ausgeführt. Im Hinblick auf Ergänzungen der aus der Zeichnung unmittelbar erkennbaren Lehren wird auf den einschlägigen Stand der Technik verwiesen. Dabei ist zu berücksichtigen, dass vielfältige Modifikationen und Änderungen betreffend die Form und das Detail einer Ausführungsform vorgenommen werden können, ohne von der allgemeinen Idee der Erfindung abzuweichen. Die in der Beschreibung, in der Zeichnung sowie in den Ansprüchen offenbarten Merkmale der Erfindung können sowohl einzeln als auch in beliebiger Kombination für die Weiterbildung der Erfindung wesentlich sein. Zudem fallen in den Rahmen der Erfindung alle Kombinationen aus zumindest zwei der in der Beschreibung, der Zeichnung und/oder den Ansprüchen offenbarten Merkmale. Die allgemeine Idee der Erfindung ist nicht beschränkt auf die exakte Form oder das Detail der im Folgenden gezeigten und beschriebenen bevorzugten Ausführungsformen oder beschränkt auf einen Gegenstand, der eingeschränkt wäre im Vergleich zu dem in den Ansprüchen beanspruchten Gegenstand. Bei angegebenen Bemessungsbereichen sollen auch innerhalb der genannten Grenzen liegende Werte als Grenzwerte offenbart und beliebig einsetzbar und beanspruchbar sein. Der Einfachheit halber sind nachfolgend für identische oder ähnliche Teile oder Teile mit identischer oder ähnlicher Funktion gleiche Bezugszeichen verwendet.

Weitere Vorteile, Merkmale und Einzelheiten der Erfindung ergeben sich aus der nachfolgenden Beschreibung der bevorzugten Ausführungsformen sowie anhand der Zeichnung; diese zeigt in:
- Fig. 1: die schematische Ansicht einer Ausführungsform einer Reinigungsvorrichtung gemäß dem Konzept der Erfindung,
- Fig. 2A-D: einen Ablauf eines Reinigungsvorganges gemäß dem Konzept der Erfindung,
- Fig. 3: zeigt eine Weiterbildung eines Druckluftsystems gemäß dem Konzept der Erfindung,
- Fig. 4: eine weitere bevorzugte Weiterbildung einer Reinigungsvorrichtung gemäß dem Konzept der Erfindung,
- Fig. 5: noch eine weitere bevorzugte Weiterbildung einer Reinigungsvorrichtung gemäß dem Konzept der Erfindung,
- Fig. 6A- 6C: noch eine weitere bevorzugte Weiterbildung einer Reinigungsvorrichtung gemäß dem Konzept der Erfindung mit einem Ventilspeichermodul,
- Fig. 7A- 7E: beispielhaft und stark vereinfacht fünf mögliche Mediumssequenzen, und
- Fig. 8: eine schematische Darstellung eines Fahrzeugs aufweisend eine Reinigungsvorrichtung gemäß dem Konzept der Erfindung.

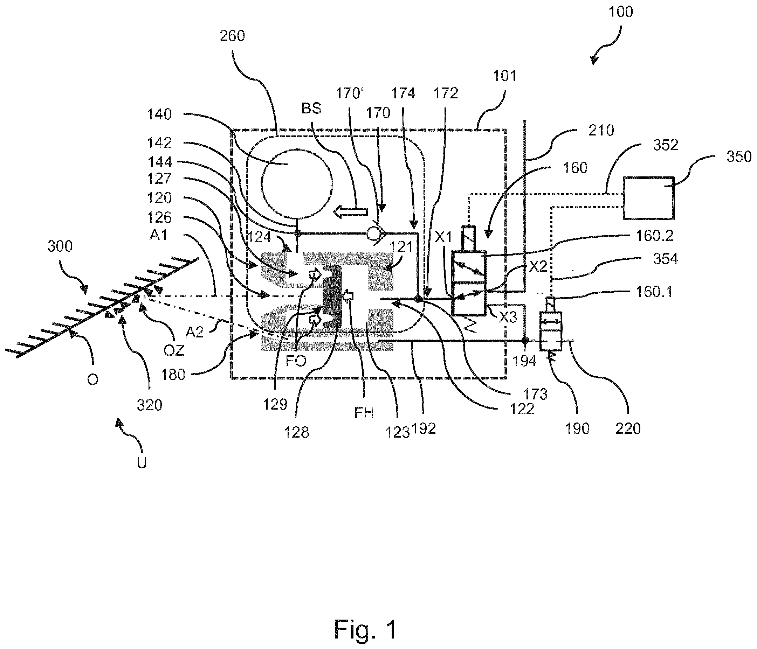

Fig. 1 zeigt die schematische Ansicht einer Ausführungsform einer Reinigungsvorrichtung 100 gemäß dem Konzept der Erfindung, welche vorliegend in Form eines Reinigungsmoduls 101 als bauliche Einheit gebildet ist. Ein Reinigungsventil 120, welches vorliegend als Schnellentlüftungsventil 121 ausgebildet ist, ist in dem Reinigungsmodul 101 angeordnet. Das Reinigungsventil 120 weist einen Halteanschluss 122 auf, welcher über eine Halteleitung 172 mit einem ersten Schaltventilanschluss X1 eines Schaltventils 160 verbunden ist. Vorliegend bilden insbesondere das Schnellentlüftungsventil 121 und der Hochdruckspeicher 140 zusammen mit einem Hochdruckspeicher-Halteventil 170 eine Speicherventilanordnung 260. Weiter weist das Reinigungsventil 120 einen Druckanschluss 124 auf, welcher über einen Speicheranschluss 142 mit einem Hochdruckspeicher 140 verbunden ist und zu einer Einlasskammer 127 des Reinigungsventils 120 führt.

Weiter weist das Reinigungsventil 120 einen Druckauslass 126 auf, der derartig ausgebildet ist, dass er ein austretendes Fluid, insbesondere ein erstes Medium M1, entlang einer ersten Strahlachse A1 in einen Zielbereich OZ einer Oberfläche O leiten kann. Die Oberfläche O kann insbesondere die Oberfläche O eines Sensors 300, oder - hier nicht dargestellt - die Oberfläche O einer Abdeckung 310 eines Sensors 300 sein. Insbesondere kann der Sensor 300 ein hier nicht dargestellte optischer Sensor 302, und insbesondere - ein hier ebenfalls nicht dargestellter - Umgebungserfassungssensor 304 sein.

Das Reinigungsventil 120 weist einen weiteren Auslass in Form einer Düse 180 auf. Die Düse 180 ist derartig ausgebildet, dass sie ein Fluid, insbesondere ein zweites Medium M2, entlang einer zweiten Strahlachse A2 auf den Zielbereich OZ der Oberfläche O leiten kann. Somit sind Druckauslass 126 und Düse 180 derartig ausgerichtet, dass sich ihre Strahlachse A1, A2 praktisch an einer Stelle, nämlich in dem Zielbereich OZ, auf der Oberfläche O schneiden.

Vorliegend sind das Reinigungsventil 120 und die Düse 180 als eine bauliche Einheit ausgebildet. Gleichwohl ist es selbstverständlich möglich, dass das Reinigungsventil 120 und die Düse 180 jeweils eigenständige bauliche Einheiten bilden, die insbesondere in einem definierten räumlichen Verhältnis zueinander montiert werden. Die Düse 180 ist mittels einer Zuführungsleitung 192 verbunden. Die Zuführungsleitung 192 ist weiterhin über ein zweites Schaltventil 190 trennbar mit einer zweiten Mediumszuleitung 220 zwecks Zuführung des zweiten Mediums M2 verbunden. Selbstverständlich ist es auch denkbar, dass sich die erste Strahlachse A1 und die zweite Strahlachse A2 nicht schneiden, sondern an jeweils unterschiedlichen Positionen auf die Oberfläche O auftreffen, beispielsweise um unterschiedlichen Trägheitseigenschaften des ersten Mediums M1 und des zweiten Mediums M2 Rechnung zu tragen, insbesondere wenn der Bereich zwischen Reinigungsvorrichtung 100 und Oberfläche 300 Beschleunigungen, Fahrtwind, und/oder dergleichen Umgebungseinflüssen ausgesetzt ist.

Vorliegend befindet sich das als Magnetventil ausgebildete Schaltventil 160 in einer ersten Haltestellung 160.1. In dieser Haltestellung 160.1 besteht eine Verbindung zwischen dem ersten Schaltventilanschluss X1 und einem zweiten Schaltventilanschluss X2. Der zweite Schaltventilanschluss X2 ist mit einer ersten Mediumszuleitung 210 verbunden, über die der Reinigungsvorrichtung 100 das erste Medium M1 zugeführt wird.

Vorliegend ist in der Halteleitung 172 eine Speicherabzweigung 173 angeordnet, von der eine Speicherleitung 174 abgeht, welche die Speicherabzweigung 173 mit einer Ladeabzweigung 144 verbindet. Über die Speicherleitung 174 kann das erste Medium M1 in einer Befüllungsrichtung BS von der Halteleitung 172 in Richtung der Ladeabzweigung 144 und weiter über einen Speicheranschluss 142 in den Hochdruckspeicher 140 strömen, wo das erste Medium M1 mit einem Speicherdruck PS, der insbesondere in Wesentlichen dem Haltedruck PH entspricht, gespeichert wird. Der Speicherdruck PS ergibt sich insbesondere aus dem Druck, mit dem das erste Medium M1 an der Halteleitung 172 bereitgestellt wird, insbesondere aus dem Haltedruck PH, gegebenenfalls abzüglich entlang der Speicherleitung 174 anfallender Druckverluste. Hierbei bewirkt das ebenfalls von der Speicherabzweigung 173 in Richtung des Halteanschluss 122 strömende erste Medium M1, dass in einer Haltekammer 123 des Reinigungsventils 120 ein Haltedruck PH herrscht. Dieser Haltedruck PH führt dazu, dass ein Stempel 128 durch eine Haltekraft FH gegen einen Auslassanschlag 129 gedrückt wird, und der Druckauslass 126 somit verschlossen ist.

Somit kann das erste Medium M1 aufgrund des von der Haltekraft FH gegen den Auslassanschlag 192 gedrückten Stempels 128 nicht von der Ladeabzweigung 144 in Richtung des Druckanschlusses 124 weiterströmen, sondern nur in den Hochdruckspeicher 140. Dies ist der Fall, weil der Strömungsweg hinter der Einlasskammer 127 durch den Stempel 128 blockiert ist. Zwar übt den Druckanschluss 124 in die Einlasskammer 127 des Reinigungsventils 120 geleitete erste Medium M1 eine der Haltekraft FH entgegengesetzte Öffnungskraft FO aus. Diese Öffnungskraft FO ist jedoch - aufgrund der kleineren beaufschlagten Fläche des Stempels 128, und weiterhin der Druckverluste, insbesondere durch die Speicherleitung 174 - geringer als die Haltekraft FH.

In der Speicherleitung 174 ist weiterhin das Hochdruckspeicher-Halteventil 170 angeordnet, welches vorliegend als ein in Befüllungsrichtung BS gegen eine Federkraft selbsttätig öffnendes Rückschlagventil 170' ausgebildet ist. Das Hochdruckspeicher-Halteventil 170 ist ausgebildet, die Strömung des ersten Mediums M1 in Befüllungsrichtung BS zuzulassen, und die Strömung in der entgegengesetzten Richtung zu sperren. Somit wird ermöglicht, dass der Hochdruckspeicher 140 insbesondere bei Beaufschlagen der Halteleitung 172 mit einem Haltedruck PH befüllt werden kann, andersherum jedoch das im Hochdruckspeicher 140 gespeicherte erste Medium M1 beim Schalten des Schaltventils 160 in eine Lösestellung 160.2 nicht über die Speicherleitung 174 entweichen kann.

Wird das Schaltventil 160 von der Haltestellung 160.1 in die Lösestellung 160.2 geschaltet, wird der zweite Schaltventilanschluss X2 gesperrt und eine Verbindung zwischen dem ersten Schaltventilanschluss X1 und einem dritten Schaltventil Anschluss X3 hergestellt. Der dritte Schaltventilanschluss X3 ist über eine Entlüftungsabzweigung 194 mit der zur Düse 180 führenden Zuführungsleitung 192 verbunden.

In der Lösestellung 160.2 kann somit das in der Haltekammer 123 gehaltene erste Medium M1 zurück über die Halteleitung 172, die Entlüftungsabzweigung 194, die Zuführungsleitung 192 und schließlich die Düse 180 entweichen. Folglich nimmt die auf den Stempel 128 wirkende Haltekraft FH ab und unterschreitet den Betrag der entgegengesetzt wirkenden Öffnungskraft FO. Dadurch wird der Stempel 128 nicht länger gegen den Auslassanschlag 129 gedrückt, sondern bewegt sich derartig in die Haltekammer 123, dass das erste Medium M1, welches unter Druck im Hochdruckspeicher 140 gespeichert ist, über den Speicheranschluss 144 und den Druckanschluss 124 und die Einlasskammer 127 zum Druckauslass 126 strömen kann, und von dort entlang der ersten Strahlachse A1 auf den Zielbereich OZ der Oberfläche O geleitet wird. Die beschriebene Zurückbewegung des Stempels 128 erfolgt dabei relativ schnell, insbesondere ruckartig und in einem relativ großen Massenstrom, so dass das erste Medium M1 mit einem relativ hohen Impuls auf die Oberfläche O trifft.

Es ist besonders bevorzugt, dass das erste Medium M1 Luft ist. Luft kann aus der Atmosphäre angesaugt werden, in einem hier nicht dargestellten Verdichter 402 zu Druckluft verdichtet werden und im Hochdruckspeicher 140 gespeichert werden. Die Beaufschlagung der Oberfläche O, insbesondere die impulsartige Beaufschlagung, mit verdichteter Druckluft durch das Reinigungsventil 120, führt zu einem vorteilhaften Reinigungseffekt, insbesondere zusammen mit einer zusätzlich abwechselnd oder gleichzeitig intermittierenden Beaufschlagung der Oberfläche O mit einem zweiten Medium M2 durch die Düse 180 des Reinigungsventils 120. Hierzu kann die Beaufschlagung mit dem zweiten Medium M2 über das zweite Schaltventil 190 gesteuert werden.

Durch ein hier beispielhaft gezeigtes Steuermodul 350, welches sowohl über eine erste Schaltventil-Steuerleitung 352 mit dem Schaltventil 160 als auch über eine zweite Schaltventil-Steuerleitung 354 mit dem zweiten Schaltventil 190 signalführend verbunden ist, können sowohl das Schaltventil 160 als auch das zweite Schaltventil 190 geöffnet oder geschlossen werden, insbesondere um in steuerbarer Weise die Oberfläche O zu beaufschlagen und/oder Mediumssequenzen zu erzeugen.

Es ist besonders bevorzugt, dass das zweite Medium M2 gebildet ist durch Wasser M2.1 oder ein Reinigungsmittel M2.2 oder eine Mischung aus Wasser M2.1 und Reinigungsmittel M2.2. Auch kann das zweite Medium M2 vorteilhaft aus einer bereits in einem System, insbesondere einem Fahrzeug vorhandenen Mediumsquelle, entnommen werden. Eine derartige Mediumsquelle kann beispielsweise ein Tank mit Reinigungsflüssigkeit für eine Scheibenreinigungsanlage sein.

Durch eine abwechselnde Beaufschlagung der Oberfläche O mit dem ersten Medium M1 und dem zweite Medium M2, oder einer gleichzeitigen, jedoch unabhängig voneinander intermittierenden Beaufschlagung der Oberfläche O mit dem ersten Medium M1 und dem zweiten Medium M2, kann vorteilhaft eine verbesserte Reinigungswirkung erzielt werden. Die verbesserte Reinigungswirkung entsteht insbesondere, da die Beaufschlagung mit einem, insbesondere flüssigen, zweiten Medium M2 zu einem Aufweichen von Dreckpartikeln 320 und der gleichen unerwünschten Partikeln auf der Oberfläche O führt, und ein anschließendes, insbesondere impulsartiges, Beaufschlagen mit einem, insbesondere gasförmigen, ersten Medium M1, zu einem zuverlässigen Entfernen der aufgeweichten Dreckpartikel 320 führt.

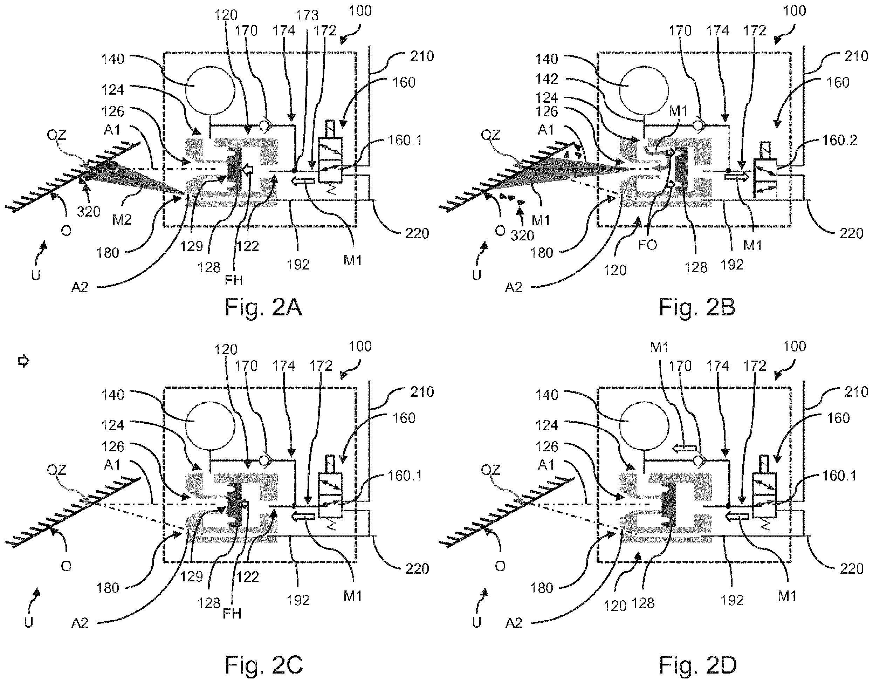

Figuren 2A bis 2D zeigen im Wesentlichen die Weiterbildung aus Fig. 1 bei einem Ablauf eines Reinigungsvorganges gemäß dem Konzept der Erfindung. In Fig. 2A erfolgt ein Beaufschlagen der Oberfläche O mit dem zweiten Medium M2 durch die Düse 180. Hierzu strömt das zweite Medium M2 über die zweite Mediumszuleitung 220 und die Zuführungsleitung 192 zu Düse 180. Etwaige Dreckpartikel 320, die sich auf der Oberfläche O befinden, werden mit dem flüssigen zweiten Medium M2 beaufschlagt und aufgeweicht. Auch ist es möglich, dass zumindest ein Teil der Dreckpartikel 320 bereits durch das Beaufschlagen mit dem zweiten Medium M2 entfernt werden.

Gleichzeitig befindet sich das Schaltventil 160 in der Haltestellung 160.1. Durch die Haltestellung 160.1 besteht eine Verbindung zwischen der ersten Mediumszuleitung 210 und der Halteleitung 172, durch welche das mit einem Haltedruck PH beaufschlagte erste Medium M1 an den Halteanschluss 122 des Reinigungsventils 120 gelangt. Hierdurch wird der Stempel 128 durch die Haltekraft FH an den Halteanschlag 129 gedrückt, und der Druckanschluss 124 somit gesperrt.

In Fig. 2B ist die Beaufschlagung der Oberfläche O mit dem zweiten Medium M2 unterbrochen und das Schaltventil 160 befindet sich in der Lösestellung 160.2. Hierdurch entweicht das erste Medium M1 aus der Halteleitung 172 und weiter über die Entlüftungsabzweigung 194 und die Düse 180 in die Umgebung U. Der Betrag der Haltekraft FH sinkt hierbei unterhalb des Betrags der entgegengesetzt wirkenden Öffnungskraft FO. Folglich bewegt sich der Stempel 128 durch die Öffnungskraft FO vom Halteanschlag 129 zurück in die Haltekammer 123. Das erste Medium M1 kann somit aus dem Hochdruckspeicher 140 über den Speicheranschluss 142 zum Druckanschluss 124, und durch das Reinigungsventil 120 weiter zum Druckauslass 126 strömen. Durch das relativ schnelle Öffnen des als Schnellentlüftungsventil 121 ausgebildeten Reinigungsventils 120 erfolgt hierdurch ein impulsartiges Beaufschlagen der Oberfläche O mit dem ersten Medium M1. Durch das impulsartige Beaufschlagen werden insbesondere die im vorherigen Schritt zumindest teilweise aufgeweichten Dreckpartikel 320 entfernt. Die Wirkung des impulsartigen Beaufschlagens ist mit der Wirkung eines mechanischen Reinigungsgeräts, zum Beispiel eines Scheibenwischers vergleichbar. Gemäß dem Konzept der Erfindung werden zu Erzielung eines solchen Reinigungseffekts jedoch keine derartigen, mechanisch bewegten, verschleißbehafteten und mit der Oberfläche O in Kontakt stehenden Teile, wie z. B. Wischer, benötigt.

In Fig. 2C ist die Reinigungsvorrichtung 100 in einem Zustand dargestellt, in dem die Beaufschlagung der Oberfläche O mit dem ersten Medium M1 beendet ist. Insbesondere ist der Hochdruckspeicher 140 entleert und das Schaltventil 160 befindet sich wieder in der Haltestellung 160.1. Die Haltestellung 160.1 führt dazu, dass das erste Medium M1 wieder über die erste Mediumszuleitung 210 in die Halteleitung 172 strömen kann und somit ein Haltedruck PH am Halteanschluss 122 anliegt. Durch den Haltedruck PH am Halteanschluss 122 und den dadurch ebenfalls in der Haltekammer 123 herrschenden Haltedruck P wird der Stempel 128 durch die resultierende Haltekraft FH wieder an den Halteanschlag 129 gedrückt. Folglich wird der Druckanschluss 124 des Reinigungsventils 120 wieder gesperrt.

In Fig. 2D ist schließlich der Zustand dargestellt, indem der Hochdruckspeicher 140 wieder gefüllt wird. Durch die Sperrung des Druckanschluss 124 strömt das erste Medium M1 nicht nur über die Halteleitung 172 zum Halteanschluss 122, sondern ebenfalls über die Speicherabzweigung 173 und die Speicherleitung 174 zum Hochdruckspeicher 140, welcher hierdurch befüllt wird. Nach dem Befüllen des Hochdruckspeichers 140 ist die Reinigungsvorrichtung 120 bereit für ein weiteres Beaufschlagen der Oberfläche O mit dem ersten Medium M1.

Die in den Figuren 2A bis 2D gezeigten Schritte müssen nicht unbedingt hintereinander erfolgen. So ist es beispielsweise möglich, den in Fig. 2A gezeigten Schritt parallel zu dem in Fig. 2D gezeigten Schritt durchzuführen. Ein Beaufschlagen der Oberfläche O mit dem zweiten Medium M2 kann somit parallel zu einem Aufladen des Hochdruckspeichers 140 erfolgen. Auch kann ein Beaufschlagen der Oberfläche O mit einem zweiten Medium M2 parallel zu einem Beaufschlagen der Oberfläche O mit einem ersten Medium M1 erfolgen.

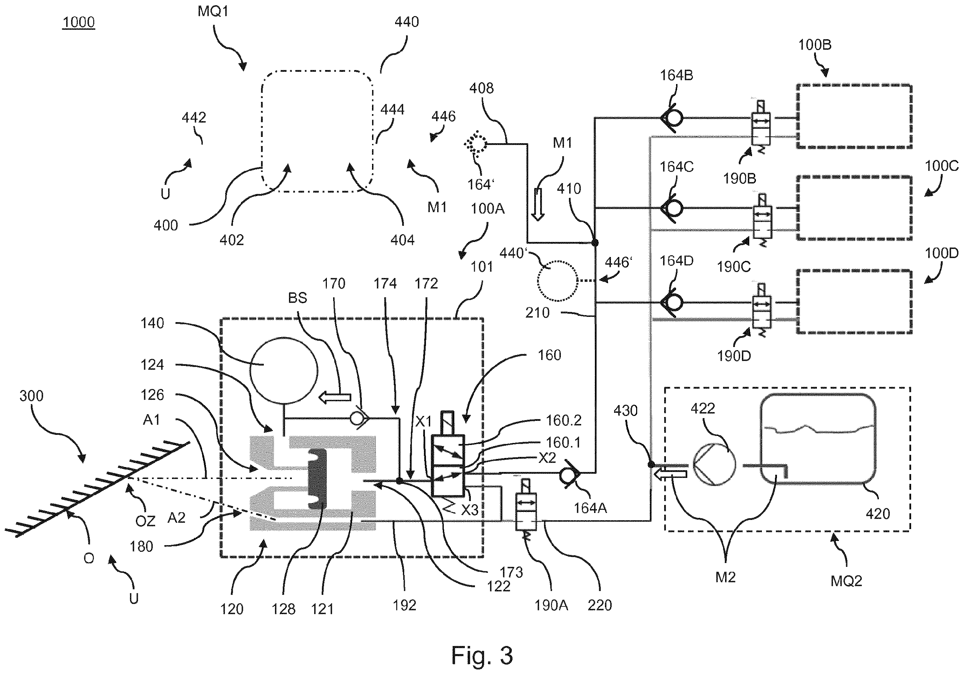

Fig. 3 zeigt eine Weiterbildung eines Druckluftsystems 1000 gemäß dem Konzept der Erfindung. Das Druckluftsystem 1000 weist vier Reinigungsvorrichtungen 100A, 100B, 100C und 1000 auf, welche im Wesentlichen jeweils der in Fig. 1 gezeigten Reinigungsvorrichtung 100 entsprechen. Hierbei ist nur eine Reinigungsvorrichtung 100A detailliert dargestellt, und die übrigen drei Reinigungsvorrichtungen 100B, 100C und 1000 der Übersichtlichkeit halber nur angedeutet.

Das Druckluftsystem 1000 weist eine erste Mediumsquelle MQ1 zur Bereitstellung eines ersten Mediums M1 auf. Die erste Mediumsquelle MQ1 ist vorliegend aus einer Verdichteranordnung 400 gebildet, wobei die Verdichteranordnung 400 einen Verdichter 402, einen Lufttrockner 404 und einen Druckluftspeicher 440 aufweist. Durch das Vorsehen eines Druckluftspeichers 440 kann vorteilhaft ein schnelleres Versorgen des Druckluftsystems 1000 erreicht werden und das Erzeugen von Druckluft zeitlich von dem Verbrauchen von Druckluft entkoppelt werden. Vorliegend ist die Verdichteranordnung 400 im Rahmen einer Weiterbildung innerhalb des Druckluftspeichers 440 angeordnet, was insbesondere zu einer vorteilhaften kompakten Bauweise führt. Das erste Medium M1, insbesondere Luft M1.1, wird aus der Umgebung U durch den Verdichter 402 über eine Verdichterzuführung 442 angesaugt und verdichtet, anschließend im Lufttrockner 404 getrocknet und über einen Verdichterauslass 444 in den Druckluftspeicher 440 geleitet. Aus dem Druckluftspeicher 440 wird das erste Medium M1 über einen Speicherauslass 446 und weiter über eine erste Quellenleitung 408 an einem ersten Versorgungsanschluss 410 bereitgestellt.

Mithilfe der Verdichteranordnung 400 in Verbindung mit dem Druckluftspeicher 440 als erste Mediumsquelle MQ1, insbesondere als Anordnung mit der Verdichteranordnung 400 innerhalb des Druckluftspeichers 440, können die Reinigungsvorrichtungen 100A, 100B, 100C und 1000 relativ schnell mit Druckluft geladen werden, zudem wird ein konstanter Druck in den mit der ersten Mediumsquelle MQ1 verbundenen Druckleitungen sichergestellt, insbesondere ohne dass dazu die Verdichteranordnung 400 aktiv werden muss.

Von dem ersten Versorgungsanschluss 410 gelangt das erste Medium M1 zu ersten Versorgungsleitung 210, von welcher es am zweiten Schaltventilanschluss X2 der Reinigungsvorrichtung 100A, und analog den übrigen drei Reinigungsvorrichtungen 100B-D bereitgestellt wird. In Strömungsrichtung vor dem zweiten Schaltventilanschluss X2 der Reinigungsvorrichtung 100A ist vorliegend ein Zuleitungs-Rückschlagventil 164A angeordnet. Weiter ist analog vor den hier nicht dargestellten zweiten Schaltventilanschlüssen der übrigen drei Reinigungsvorrichtungen 100B-D jeweils ein Zuleitungs-Rückschlagventil 164B-D angeordnet, nämlich in den zu den jeweiligen Reinigungsvorrichtungen 100B-D führenden Zweigen der ersten Mediumszuleitung 210. Die Zuleitungs-Rückschlagventile 164A-D vor den jeweiligen Reinigungsvorrichtungen 100A-D können vorteilhaft verhindern, dass der Haltedruck PH und somit die Haltekraft FH nachlässt. Ein Nachlassen des Haltedrucks PH könnte insbesondere aufgrund von Leckage in den Quellen- und Mediumszuleitungen, insbesondere in der ersten Quellenleitung 408 und/oder der ersten Mediumszuleitung 210, auftreten, oder wenn der Luftdruck von der ersten Mediumsquelle MQ1 nicht konstant gehalten werden kann.

Alternativ oder zusätzlich zu den Zuleitungs-Rückschlagventilen 164A-D kann das Druckluftsystem 1000, insbesondere - wie in Fig. 3 gestrichelt dargestellt - in der ersten Quellenleitung 408, ein weiteres Zuleitungs-Rückschlagventil 164` aufweisen. Hierdurch wird vorteilhaft erreicht, dass das von der ersten Mediumsquelle MQ1 erzeugte und insbesondere verdichtete erste Medium bei einem Druckabfall in der ersten Mediumsquelle MQ1, insbesondere im Druckluftspeicher 440, nicht zurückströmt, was einen Druckabfall in der ersten Mediumszuleitung 210 zur Folge hätte. Stattdessen bewirkt das gegen die Förderrichtung der ersten Medienquelle sperrende weitere Zuleitungs-Rückschlagventil 164`, dass das erste Medium nicht in Richtung der ersten Mediumsquelle MQ1 zurückströmt und somit insbesondere ein Haltedruck PH in der ersten Mediumszuleitung 210 gehalten wird.

Alternativ oder zusätzlich zu dem Druckluftspeicher 440 kann das Druckluftsystem 1000, insbesondere - wie in Fig. 3 gestrichelt dargestellt - in der ersten Mediumszuleitung 210, einen weiteren Druckluftspeicher 440' aufweisen. Dieser ist vorliegend über einen Speicherauslass 446' an die Mediumszuleitung 210 angeschlossen. Auch ist es möglich, den Speicherauslass 446` an einer anderen geeigneten Stelle des Druckluftsystems 1000, beispielsweise in der ersten Quellenleitung 408, anzuordnen.

Alternativ oder zusätzlich kann - in einer hier nicht dargestellten Weiterbildung - auch ein erstes Medium M1, insbesondere Druckluft, verwendet werden, welches von einer anderen Mediumsquelle MQ1' bezogen wird, insbesondere einer Mediumsquelle MQ1', die einem anderen Primärzweck dient. Eine solche andere Mediumsquelle MQ1' kann beispielsweise eine Druckluftversorgungsanlage 900 für eine Luftfederanlage 901 oder dergleichen Pneumatikanlage 910 eines Fahrzeugs 800 sein.

Das Druckluftsystem 1000 weist weiter eine zweite Mediumsquelle MQ2 zur Bereitstellung eines insbesondere flüssigen zweiten Mediums M2 auf. Vorliegend ist die zweite Mediumsquelle MQ2 aus einem Tank 420 und einer an den Tank angeschlossenen Pumpe 422 gebildet. Mittels der Pumpe kann das zweite Medium M2 aus dem Tank 420 zu einem zweiten Versorgungsanschluss 430 gefördert werden. Über den zweiten Versorgungsanschlüsse 430 gelangt das zweite Medium M2 zur zweiten Mediumszuleitung 220. Die zweite Mediumszuleitung 220 ist mit dem zweiten Schaltventil 190A der Reinigungsvorrichtung 100A, und weiter mit den zweiten Schaltventilen 190B-D der jeweiligen weiteren Reinigungsvorrichtungen 100B-D verbunden. Über die zweiten Schaltventile 190A-D kann somit die Versorgung der jeweiligen Reinigungsvorrichtungen 100A-D mit dem zweiten Medium M2 einzeln gesteuert werden.

Alternativ oder zusätzlich kann - in einer hier nicht dargestellten Weiterbildung - auch ein zweites Medium M2 verwendet werden, welches von einer anderen Mediumsquelle MQ2' bezogen wird, insbesondere einer Mediumsquelle MQ2`, die einem anderen Primärzweck dient. Eine solche andere Mediumsquelle MQ2` kann beispielsweise eine Scheibenreinigungsanlage 922 oder dergleichen Reinigungsanlage 920 für ein Fahrzeug 800 sein.

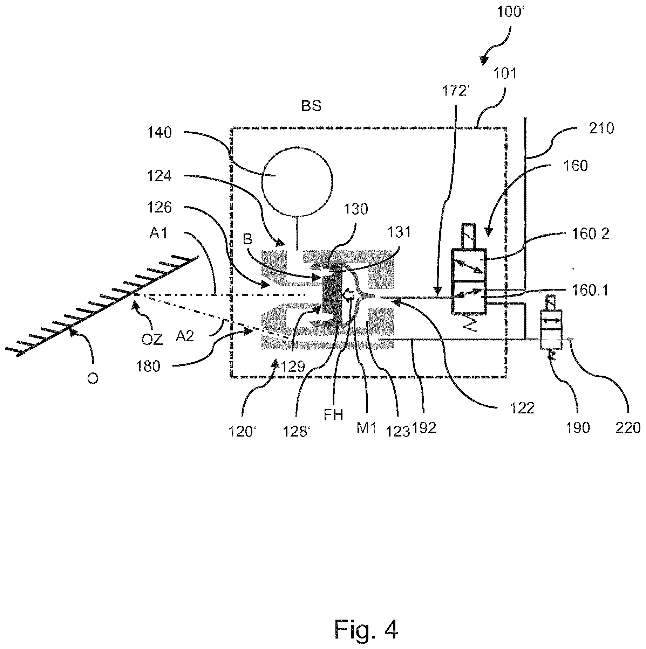

Fig. 4 zeigt eine weitere bevorzugte Weiterbildung einer Reinigungsvorrichtung 100' gemäß dem Konzept der Erfindung. Die hier dargestellte Weiterbildung unterscheidet sich von den vorhergehend dargestellten Weiterbildungen insbesondere dadurch, dass die Reinigungsvorrichtung 100' keine Speicherabzweigung 173 und keine Speicherleitung 174 aufweist. Somit führt eine Halteleitung 172 ausschließlich vom ersten Schaltventilanschluss X1 zum Halteanschluss 122 eines Reinigungsventils 120'. Ein spezieller Stempel 128' ist derartig ausgebildet, dass er bei Beaufschlagen des Halteanschluss 122 zunächst - wie auch bei den anderen gezeigten Weiterbildungen - durch eine Haltekraft FH an den Halteanschlag 129 gedrückt wird. Der Stempel 128' weist vorliegend auf der Einlasskammer 127 zugewandten Seite B eine Ringaussparung 131 und dadurch eine im Wesentlichen am Außenumfang des Stempels 128' verlaufende Dichtlippe 130 auf. Durch eine derartige Ausbildung des Stempels 128' bewirkt das unter dem Haltedruck PH stehende erste Medium M1, das sich der Haltekammer 123 befindet, dass sich die Dichtlippe 130 radial nach innen bewegt und das erste Medium M1 somit vorbei an dem Stempel 128' in die Einlasskammer 127 des Reinigungsventils 120' strömen kann. Auf diese Weise gelangt das erste Medium M1 über den Druckanschluss 124, und weiter den Speicheranschluss 142 zum Hochdruckspeicher 140. Wenn der Hochdruckspeicher 140 vollständig geladen ist, insbesondere im Hochdruckspeicher 140 der Haltedruck PH herrscht, schließt sich die Dichtlippe 130 wieder, dann nun der ebenfalls in der Einlasskammer 127 herrschende Haltedruck PH zu einer auf den Stempel 128' und insbesondere auf die Ringaussparung 131 wirkenden Öffnungskraft führt, welche die Dichtlippe 130 wieder radial nach außen bewegt und somit die Strömung des ersten Mediums M1 aus der Haltekammer 123 in die Einlasskammer 120 blockiert. Wenn das Steuerventil 160 von der Haltestellung 160.1 in die Lösestellung 160.2 geschaltet wird, und somit die Haltekraft FH plötzlich absinkt, bewegt sich der Stempel 128 zurück in die Haltekammer 123. Durch das aus dem Hochdruckspeicher 140 über den Druckanschluss 124 in die Einlasskammer 127 strömende erste Medium M1 wirkt eine Öffnungskraft FO auf die der Einlasskammer 127 zugewandte Seite, und somit auch auf die Ringaussparung 131. Die radiale Dichtwirkung der Dichtlippe 130 bleibt somit auch bei einem Öffnen des Reinigungsventils 120' aufrechterhalten.

Somit übernimmt der Stempel 128' in dieser Weiterbildung sowohl die Funktion der Speicherleitung 174 als auch des als Rückschlagventil wirkenden Hochdruckspeicher-Halteventils 170 und der Aufbau der Reinigungsvorrichtung wird vorteilhaft vereinfacht.

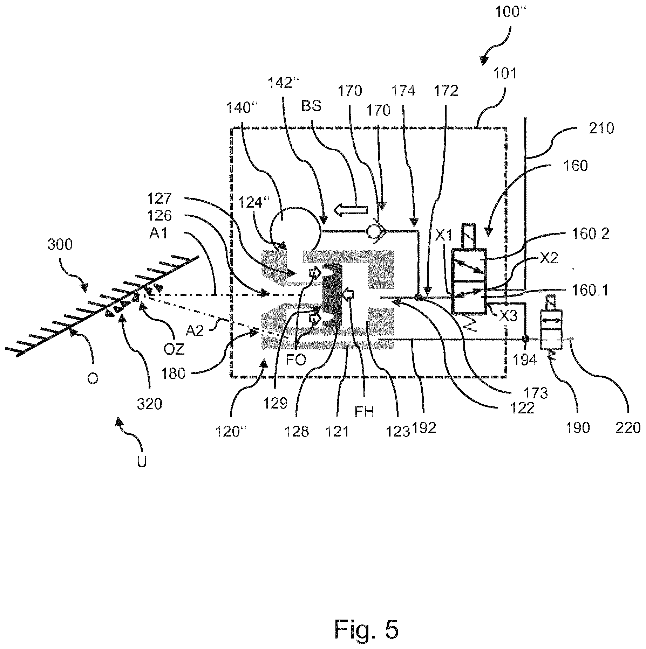

Fig. 5 zeigt noch eine weitere bevorzugte Weiterbildung einer Reinigungsvorrichtung 100" gemäß dem Konzept der Erfindung mit einem Reinigungsventil 120". In dieser Weiterbildung bilden ein Hochdruckspeicher 140" und das Reinigungsventil 120" eine bauliche Einheit, insbesondere ist der Hochdruckspeicher 140" unmittelbar an dem Reinigungsventil 120" angeordnet. Insbesondere kann der Hochdruckspeicher 140" einstückig an das Reinigungsventil 120" oder das Gehäuse des Reinigungsventils 120" angeformt sein, oder trennbar mit dem Reinigungsventil 120" oder dem Gehäuse des Reinigungsventils 120" verbunden sein, beispielsweise über eine Schraub- und/oder Flanschverbindung. In einer derartigen Weiterbildung, insbesondere wenn der Hochdruckspeicher 140" in das Reinigungsventil 120" integriert ist oder mit diesem eine bauliche Einheit bildet, wird vorteilhaft ein kompakter Aufbau erreicht. Weiterhin wird durch die Nähe zwischen dem Hochdruckspeicher 140" und dem Reinigungsventil 120" erreicht, dass das Medium kürzere Wege zurücklegen muss und daher Druckverluste vorteilhaft verringert werden. Auch kann dadurch der Impuls des Mediums, dass aus dem Hochdruckspeicher 140" durch das Reinigungsventil 120" auf die Oberfläche 300 geleitet wird, vorteilhaft vergrößert werden.

Auch ist es vorteilhaft möglich, die in Fig. 4 gezeigte Weiterbildung und die in Fig. 5 gezeigte Weiterbildung zu kombinieren, um das Merkmal eines einseitig durchlässigen Stempels 128` mit dem Merkmal eines unmittelbar mit dem Reinigungsventil 120" verbundenen Hochdruckspeichers 140" synergetisch zu kombinieren, insbesondere, weil auf diese Weise die Wege, die das erste Medium zurücklegen muss, weiter verringert werden kann.

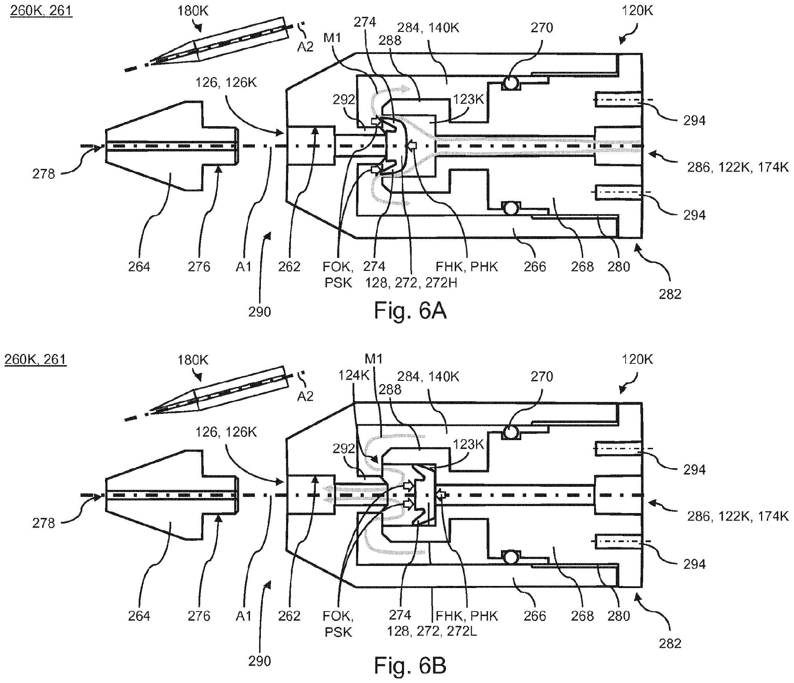

Fig. 6A zeigt eine Speicherventilanordnung 260K in Form eines integrierten Speicherventilmoduls 261 einer hier nur ausschnittsweise dargestellten Reinigungsvorrichtung 100K. Das Speicherventilmodul 261 kombiniert insbesondere die Funktion eines Reinigungsventils 120K und eines Hochdruckspeichers 140K in integrierter Weise, das heißt integriert in ein Modul. Das Speicherventilmodul 261 weist insbesondere ein Modulaußenteil 266 und ein Modulinnenteil 268 auf, wobei das Modulinnenteil 268 entlang einer ersten Strahlachse A1 in das Modulaußenteil 266 eingesetzt und, insbesondere mittels eines Modulgewindes 280 durch Einschrauben, befestigt werden kann. Das Modulgewinde 280 kann beispielsweise ein M30-Gewinde sein. Zur Begrenzung der Einschraubbewegung kann das Modulinnenteil 268 insbesondere einen Flanschabschnitt 282 aufweisen, der im eingeschraubten Zustand des Modulinnenteils 268 an das Modulaußenteil 266 anschlägt. Innerhalb des Modulaußenteils 266 bildet sich, im radialen Zwischenraum zwischen dem Modulinnenteil 268 und dem Modulaußenteil 266, ein Radialraum 284, der die Aufgabe eines Hochdruckspeichers 140K gemäß dem Konzept der Erfindung übernimmt. Das Modulaußenteil 266 weist an einer Modulvorderseite 290, das heißt der dem Flanschabschnitt 282 in axialer Richtung gegenüberliegenden Seite des Ventilspeichermoduls 261, einen Wechselanschluss 262 zum austauschbaren Anschließen einer Moduldüsenspitze 264 auf.

Weiterhin ist vorliegend eine Düse 180K dargestellt, die ausgebildet ist, ein hier nicht dargestelltes zweites Medium M2 entlang einer zweiten Strahlachse A2 auf eine hier ebenfalls nicht dargestellte, zu reinigende Oberfläche 300 zu leiten. In der hier dargestellten Weiterbildung ist die Düse 180K baulich getrennt von dem Ventilspeichermodule 260 dargestellt. Gleichwohl ist es natürlich auch denkbar, dass die Düse 180K baulich in das Ventilspeichermodul 261, insbesondere in das Modulaußenteil 266, integriert ist.

Das Modulinnenteil 268 weist weiter einen Topfabschnitt 288 auf, welcher einen praktisch hohlzylindrischen, zu der dem Flanschabschnitt 282 abgewandten Seite jedoch offenen, Raum bildet, in dem ein axial in Richtung der ersten Strahlachse A1 translatorisch beweglicher Modulstempel 272 aufgenommen werden kann. Dieser Raum entspricht einer Haltekammer 123K gemäß der in Fig. 1 gezeigten Weiterbildung. Der Modulstempel 272 übernimmt dabei die Funktion eines Stempels 128K gemäß der in Fig. 1 gezeigten Weiterbildung. Dies bedeutet, dass der Modulstempel 272 insbesondere in Abhängigkeit von einem am Modulanschluss 286 herrschenden Haltedruck PHK und einem im Hochdruckspeicher 140K herrschenden Speicherdruck PSK, selektiv zwischen einer Haltestellung 272H und einer Lösestellung 272L bewegt werden kann. Analog zu der in Fig. 1 beschriebenen Funktionsweise resultiert der am Modulanschluss 286 herrschende Haltedruck PHK in einer Haltekraft FHK, welche auf den Modulstempel 272, und zwar in einer axialen Richtung vom Flanschabschnitt 282 zur Modulvorderseite 290, wirkt. Gleichzeitig wirkt eine Öffnungskraft FOK in entgegengesetzter Richtung, das heißt von der Modulvorderseite 290 in Richtung des Flanschabschnittes 282, auf den Modulstempel 272, wobei die Öffnungskraft FOK aus einem im Hochdruckspeicher 140K herrschenden Speicherdruck PSK resultiert. In Fig. 6A ist das Ventilspeichermodul 261 während des Befüllens des Hochdruckspeichers 140K dargestellt. Hierbei ist der Haltedruck PHK insbesondere so groß gewählt, dass die Haltekraft FHK größer ist als die Öffnungskraft FOK, und somit der Modulstempel 272 innerhalb des Topfabschnittes 288 in Richtung der Modulvorderseite 290 gegen einen Passagestutzen 292 des Modulaußenteils 266 gedrückt wird. Der Modulstempel 272 befindet sich somit in einer Haltestellung 272H. Dadurch, dass der Modulstempel 272 eine bewegliche, insbesondere elastische, Stempellippe 274 aufweist, kann das über den Modulanschluss 286 hereinströmende erste Medium M1 an mindestens einer Stelle des ringförmigen Kontakts zwischen dem Modulstempel 272 und dem Topfabschnitt 288 hindurchströmen und so in den Hochdruckspeicher 140 K gelangen. Gleichzeitig hat die Art und Anordnung der Stempellippe 274 eine Sperrwirkung in entgegengesetzter Richtung zur Folge, das heißt, dass das erste Medium M1 aus dem Hochdruckspeicher 140K nicht zurück in den Topfabschnitt 288 strömen kann, wenn sich der Modulstempel 272 in der Halteposition 272H befindet. Der ringförmige Raum zwischen dem Passagestutzen 292 und dem Topfabschnitt 288 übernimmt somit im erweiterten Sinne die Funktion eines Druckanschlusses 124K gemäß der in Fig. 1 gezeigten Weiterbildung. Der Hochdruckspeicher 140K wird weiter durch eine Modulspeicherdichtung 270 abgedichtet, welche verhindert, dass Luft durch den Zwischenraum zwischen dem Modulinnenteil 268 und dem Modulaußenteil 266, insbesondere über das Modulgewinde 280, entweichen kann. Insbesondere strömt das erste Medium M1 so lange in den Hochdruckspeicher 140K, bis sich ein Kräftegleichgewicht zwischen der Öffnungskraft FOK und der Haltekraft FHK eingestellt hat. Weiterhin drückt die Öffnungskraft FOK die Stempellippe 274 dichtend an den Topfabschnitt 288, sodass das erste Medium M1 nicht aus dem Hochdruckspeicher 140K entweichen kann.

In Fig. 6B ist die als Ventilspeichermodul 261 ausgebildete Ventilspeicheranordnung 260K im gelösten Zustand dargestellt, das heißt der Modulstempel 272 befindet sich in einer Lösestellung 272L. Dies wird insbesondere dadurch erreicht, dass der am Modulanschluss 286 herrschende Haltedruck PHK derart gesenkt wird, insbesondere durch ein Entlüften mittels eines hier nicht dargestellten Schaltventils, dass entsprechend die Haltekraft FHK sinkt und insbesondere das axiale Kräftegleichgewicht um den Modulstempel 272 aufgelöst wird. In diesem Fall wird der Modulstempel 272 von dem im Hochdruckspeicher 140K herrschenden Speicherdruck PSK und der daraus resultierenden Öffnungskraft FOK in den Topfabschnitt 288 gedrückt, wodurch der Modulstempel 272 vom Passagestutzen 292 entfernt wird, und ein Druckauslass 126K freigegeben wird, durch den das hochdruckbeaufschlagte erste Medium M1, insbesondere impulsartig, entweicht. Insbesondere kann eine Moduldüsenspitze 264 über einen Wechselanschluss 262 an das Modulaußenteil 266 angeschlossen sein, sodass das entweichende erste Medium M1 entlang der Strahlachse A1 auf eine hier nicht dargestellte, zu reinigende Oberfläche 300 geleitet wird. Hierzu weist die Moduldüsenspitze 264 auf der dem Modulaußenteil 266 zugewandten Seite einen Einsatzabschnitt 276 auf, der in den Wechselanschluss 262 eingesetzt werden kann. Zum Leiten des ersten Mediums M1 weist die Moduldüsenspitze 264 eine Spitzenpassage 278 auf, welche insbesondere hohlzylindrisch koaxial zur ersten Strahlachse A1 ausgebildet ist. Der Durchmesser der Spitzenpassage 278 kann beispielsweise 4 mm oder 3 mm oder 2 mm betragen. Vorliegend ist die Moduldüsenspitze 264 konisch geformt, jedoch sind auch andere Formen, beispielsweise eine zylindrische Form, denkbar. Die Verbindung zwischen dem Wechselanschluss 262 und dem Einsatzabschnitt 276 kann über eine Gewindeverbindung, insbesondere mit einem M8-Gewinde, hergestellt werden. Die axiale Länge des Einsatzabschnitts 276 kann beispielsweise 7 mm betragen. Die axiale Gesamtlänge der Moduldüsenspitze 264, einschließlich des Einsatzabschnitts 276, kann 19 mm oder 26 mm betragen.

Der Modulanschluss 286 übernimmt in der gezeigten Weiterbildung sowohl die Funktion eines Halteanschlusses 122K, als auch die Funktion einer Speicherzuleitung 174K. Das heißt, dass der Modulanschluss 286 mit dem ersten Medium M1, insbesondere Druckluft, beaufschlagt werden kann, um zum einen eine Haltekraft FHK auf den Modulstempel 272 auszuüben, und zum anderen den Hochdruckspeicher 140K mit dem ersten Medium M1 zu befüllen.

Nachdem der Hochdruckspeicher 140K entleert ist, das heißt nachdem das erste Medium M1 aus dem Hochdruckspeicher 140K über den Druckauslass 126K entwichen ist, kann der Hochdruckspeicher 140K wieder befüllt werden, indem wieder ein Haltedruck PHK an den Modulanschluss 286 angelegt wird. Infolgedessen bewegt sich der Modulstempel 272 wieder in die Haltestellung 272H, und das erste Medium M1, insbesondere Druckluft, kann wie bereits oben beschrieben an der Stempellippe 272 vorbei in den Hochdruckspeicher 140K strömen.

Die Moduldüsenspitze 264 ist vorliegend im nicht montierten Zustand dargestellt. Im Betrieb des Ventilspeichermoduls 261 ist diese entsprechend mit dem Modulaußenteil 266 verbunden, insbesondere verschraubt. Die lösbare Verbindung ermöglicht vorteilhaft ein Auswechseln der Moduldüsenspitze und/oder einen verbesserten Zugang zum Druckauslass 126K zwecks Wartung oder Reinigung. Das Modulinnenteil 268 weist weiterhin vier Befestigungslöcher 294 auf, von denen zwei in der Schnittdarstellung sichtbar sind. Diese können jeweils ein Gewinde, insbesondere ein M3-Gewinde aufweisen, sodass das Ventilspeichermodul 261 mittels entsprechenden M3-Schrauben an einer Struktur, insbesondere an einem hier nicht dargestellten Fahrzeug, befestigt werden kann.

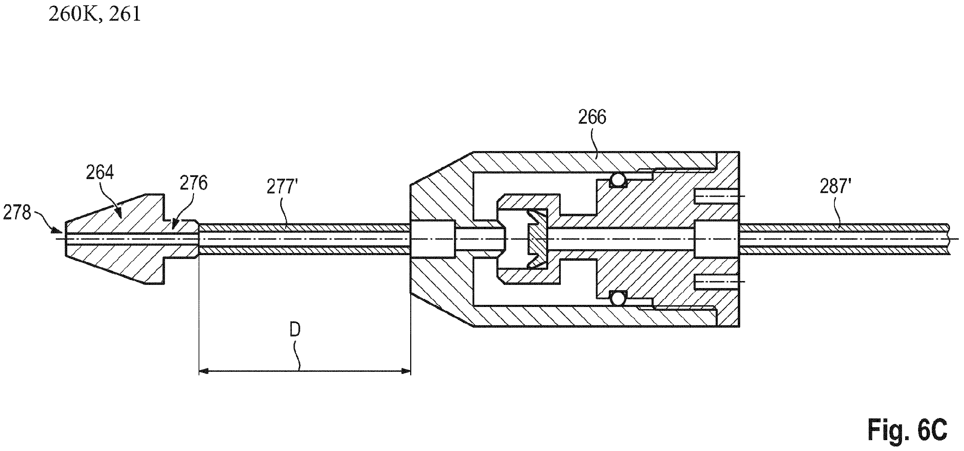

Fig. 6C zeigt für die Speicherventilanordnung 260K als Ventilspeichermodul 261 in einer weiteren leicht abgewandelten Ausführungsform eine Abwandlung zur Anbringung der Moduldüsenspitze 264. In der Fig. 6C sind nur die hier relevanten Bezugszeichen aufgeführt; aufgrund der weitgehend gleichen Ausbildung des Ventilspeichermoduls 261 wird bezüglich der Details auf die Beschreibung der anderen Figuren verweisen. Die Moduldüsenspitze 264 kann alternativ zu der oben beschriebenen Anbringung direkt in Kontakt mit und am Modulaußenteil 266 auch -wie hier in Fig. 6C dargestellt-- unter Beabstandung zu diesem gleichwohl für einen Mediumtransport mit dem Modulaußenteil 266 verbunden sein. Dazu ist bei dem Modulaußenteil 266 der Speicherventilanordnung 260K in dieser Abwandlung zwischen Druckauslass 126 und Moduldüsenspitze 264 eine Druckleitung 277' angebracht.

Durch diese entweicht das hochdruckbeaufschlagte erste Medium M1, vornehmlich impulsartig, entlang der Strahlachse A1. Es kann dabei, unabhängig von der Einbaulage des Reinigungsventils 120 über die Moduldüsenspitze 264 auf eine hier nicht dargestellte, zu reinigende Oberfläche 300 geleitet werden. Es kann aber auch der Ausgang der Druckleitung 277' selbst derart ausgearbeitet sein, dass dieser selbst als Düsenspitze fungiert. Der Ausgang der Druckleitung 277' kann also selbst die Funktion einer Düsenspitze abbilden, wobei der Ausgang der Druckleitung 277' auch beliebig vereinfacht geformt sein kann (beispielsweise einfach abgeschnitten sein kann) solange ein hochdruckbeaufschlagtes erstes Medium M1, vornehmlich impulsartig, entweichen kann. Dies hat den Vorteil, dass eine separate Düsenspitze 264 gemäß der vorher erläuterten Ausführungsformen weitgehend entfallen könnte und somit Teile und Kosten gespart werden; der Ausgang der Druckleitung 277' kann ggfs. ausgeformt sein mit einer Spitzenpassage 278 oder eine funktionierende Düsenspitze kann an diesen Ausgang angeformt sein (wie hier gezeigt) oder der Ausgang selbst kann als funktionierende Spitzenpassage 278 dienen, um in allen Fällen eine Spitzenpassage 278 zu bilden.

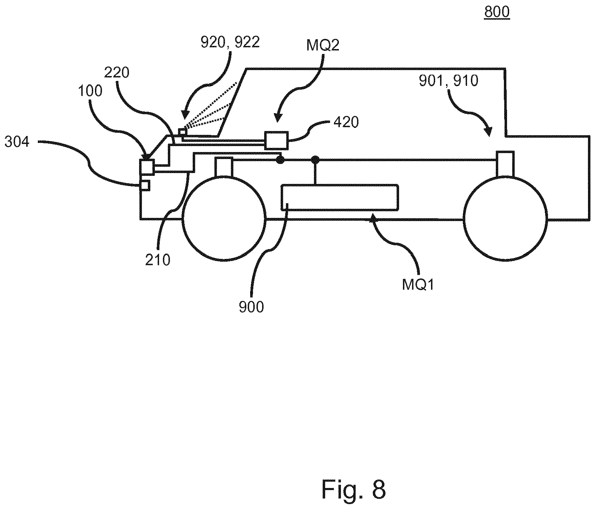

Die Druckleitung 277' kann also an das Modulaußenteil 266 angeschlossen und sein, um diese mit Medium zu beaufschlagen, und das Modulaußenteil 266 kann wiederum über eine Druckleitung 287' versorgt werden. Eine Verbindung zwischen Druckleitung 277', 287' (z. B. ein Schlauch) und dem Modulaußenteil 266 (Gehäuse) kann beispielsweise über einen Flansch oder eine Steckverbindung inkl. Schelle od. dgl. bewirkt werden. Die Länge D der Druckleitung 277', 287' kann bis zu einige Meter betragen, je nach zu überbrückender Distanz im Fahrzeug wie es z. B. in Fig. 8 dargestellt ist. Eine Anzahl von Modulaußenteilen 266 mehrerer Ventilspeichermodule 261 kann beispielsweise in einem Block kompakt gebildet sein, an den dann die Druckleitungen 277', 287` angeschlossen sind.

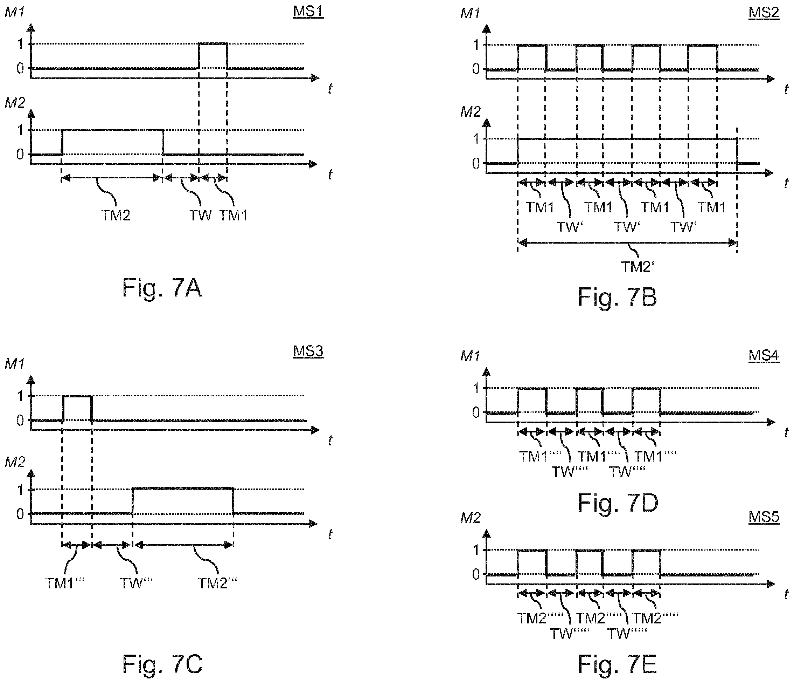

Die Figuren 7A bis 7E zeigen beispielhaft und stark vereinfacht fünf mögliche Mediumssequenzen MS1 bis MS5. Das Schalten der Medienströme, also die jeweilige Beaufschlagung mit dem ersten Medium M1 und dem zweiten Medium M2, ist vorliegend vereinfacht binär mit den Werten null und eins dargestellt. Selbstverständlich ist es auch möglich, die jeweiligen Medienströme M1 und M2, insbesondere durch ein kontinuierliches Ansteuern des ersten Schaltventils 160 und des zweiten Schaltventils 190, kontinuierlich zu steuern oder zu regeln. In Fig. 7A ist eine erste Mediumssequenz MS1 dargestellt. Hier wird zunächst, insbesondere durch das Öffnen des zweiten Schaltventils 190, das zweite Medium M2 auf die Oberfläche O geleitet. Nachdem nach einem zweiten Beaufschlagungszeitraum TM2 das Zuführen des zweiten Mediums M2 beendet wurde, erfolgt nach einer Wartezeit TW das Beaufschlagen der Oberfläche O mit dem ersten Medium M1. Dieses Beaufschlagen erstreckt sich über einen ersten Beaufschlagungszeitraum TM1. Der erste Beaufschlagungszeitraum TM1 wird hierbei insbesondere durch das Fassungsvermögen des Hochdruckspeichers 140 sowie die Strömungsgeschwindigkeit des ersten Mediums M1 durch das Reinigungsventil 120 bestimmt.

In Fig. 7B wird eine zweite Mediumssequenz MS2 dargestellt. Bei der zweiten Mediumssequenz MS2 erfolgt eine im Wesentlichen zeitlich parallele Beaufschlagung der Oberfläche O mit dem ersten Medium M1 und dem zweiten Medium M2. Hierbei erfolgt die Beaufschlagung der Oberfläche O mit dem ersten Medium M1 intermittierend in mehreren Impulsen, nämlich vier aufeinander folgenden Impulsen, jeweils mit der Dauer TM1. Die einzelnen Impulse sind dabei unterbrochen von einer Wartezeit TW'. Währenddessen erfolgt die Beaufschlagung der Oberfläche O mit dem zweiten Medium M2 über einen Zeitraum TM2`. Selbstverständlich können auch hier - je nach Anforderungen und Umgebungsbedingungen, die Länge und die Anzahl der Beaufschlagungen, insbesondere der Impulse des ersten Mediums M1, angepasst werden.

In Fig. 7C ist eine dritte Mediumssequenz MS3 dargestellt. Hierbei ist die Reihenfolge der Beaufschlagung im Wesentlichen umgekehrt zu der in Fig. 7A gezeigten Mediumssequenz MS1. Das bedeutet insbesondere, dass erst eine Beaufschlagung mit einem ersten Medium M1 über eine erste Dauer TM1‴ erfolgt, und nach dieser Beaufschlagung und einer anschließenden Wartezeit TW‴ eine Beaufschlagung mit einem zweiten Medium M2 über eine zweite Dauer TM2‴ erfolgt. Durch eine derartige Mediumssequenz MS3 können somit zunächst durch ein impulsartiges Beaufschlagen mit einem ersten, insbesondere gasförmigen, Medium M1, insbesondere Dreck und Partikel von der Oberfläche gelöst werden, und anschließend durch ein Beaufschlagen mit einem zweiten, insbesondere flüssigen, Medium M2 gereinigt werden.

In Fig. 7D ist eine vierte Mediumssequenz MS4 dargestellt. In dieser Mediumssequenz MS4 erfolgt eine ausschließliche Beaufschlagung der Oberfläche O mit einem ersten Medium M1. Insbesondere kann dies bedeuten, dass die Oberfläche O lediglich mit einem gasförmigen Medium impulsartig, insbesondere mit Luftdruckpulsen, beaufschlagt wird. Dies kann beispielsweise möglich oder sinnvoll sein, wenn die Oberfläche O bereits nass ist, beispielsweise während es regnet. Vorliegend ist beispielhaft eine Abfolge von drei Beaufschlagungen, jeweils mit einer ersten Dauer TM1ʺʺ, dargestellt, zwischen denen jeweils eine Wartezeit TWʺʺ liegt.

In Fig. 7E ist eine fünfte Mediumssequenz MS5 dargestellt. In dieser Mediumssequenz MS5 erfolgt eine ausschließliche Beaufschlagung der Oberfläche O mit einem zweiten Medium M2. Insbesondere kann dies bedeuten, dass die Oberfläche O lediglich mit einem flüssigen Medium, insbesondere mit Wasser oder einer Reinigungsflüssigkeit, beaufschlagt wird. Vorliegend ist beispielhaft eine Abfolge von drei Beaufschlagungen, jeweils mit einer zweiten Dauer TM2‴ʺ, dargestellt, zwischen denen jeweils eine Wartezeit TW‴ʺ liegt.

Selbstverständlich können die in den Figuren 7A bis 7E gezeigten Abläufe beliebig und insbesondere nach Bedarf wiederholt oder miteinander kombiniert werden. Hierzu kann insbesondere ein hier nicht dargestelltes Steuermodul 350 oder dergleichen Steuereinrichtung eingesetzte werden. Insbesondere kann ein abwechselndes Beaufschlagen von einem ersten Medium M1 und einem zweiten Medium M2, insbesondere ein abwechselndes Beaufschlagen von Druckluft und Reinigungsflüssigkeit zum Erreichen einer gewünschten oder erforderlichen Reinigungswirkung vorteilhaft vorgesehen sein.

Es ist weiterhin möglich, die Anzahl der Wiederholungen einer einzelnen Beaufschlagung oder einer Mediumssequenz festzulegen, beispielsweise drei oder fünf Wiederholungen.

Auch ist es in einer Weiterbildung vorteilhaft möglich, eine einzelne Beaufschlagung oder eine Mediumssequenz in Abhängigkeit der erreichten Reinigungswirkung und/oder der auf der Oberfläche O verbleibenden Partikel 320 zu wiederholen. So kann beispielsweise ein Messwert des der Oberfläche O zugeordneten Sensors 300 als Abbruchkriterium für die Wiederholungen dienen. Hierzu kommt beispielsweise ein Helligkeitswert eines optischen Sensors in Frage, der sich mit einem zunehmenden Entfernen von Partikeln von der Oberfläche erhöht oder ein Referenzbild, welches mit zunehmendem Entfernen von Partikeln von der Oberfläche eine erhöhte Übereinstimmung mit dem von dem optischen Sensor 300 aufgenommenen Kamerabild aufweist.

Fig. 8 zeigt eine schematische Darstellung eines Fahrzeugs 800 - vorliegend in Form eines PKW - aufweisend eine Reinigungsvorrichtung 100 für einen Umgebungserfassungssensor 304. Vorliegend wird die erste Mediumsquelle MQ1 durch eine Druckluftversorgungsanlage 900 gebildet, welche weiterhin zur Versorgung einer Pneumatikanlage 910 in Form einer Luftfederanlage 901 vorgesehen ist. Selbstverständlich ist es auch möglich, dass die erste Mediumsquelle MQ1 von einem separaten Verdichter oder dergleichen Druckluftquelle gebildet wird. Die erste Mediumsquelle MQ1 ist zwecks Zuführung des ersten Mediums M1 über eine erste Mediumszuleitung 210 mit der Reinigungsvorrichtung 100 verbunden. Die zweite Mediumsquelle MQ2 weist vorliegend durch einen Tank 420 auf, welcher ebenfalls zur Versorgung einer Reinigungsanlage 920 in Form einer Scheibenreinigungsanlage 922 mit Reinigungsflüssigkeit eingesetzt wird. Dieser Tank 420 ist über eine zweite Mediumszuleitung 220 mit der Reinigung Vorrichtung 100 verbunden. Auf diese Weise kann über eine - hier aus Gründen der Übersichtlichkeit nicht dargestellte - Pumpe 422 das zweite Medium M2 der Reinigungsvorrichtung 100 bereitgestellt werden. Selbstverständlich ist es bei der zweiten Mediumsquelle MQ2 ebenso möglich, dass diese durch eine eigene separate, insbesondere von anderen Systemen unabhängige, Mediumsquelle gebildet wird.

### Bezugszeichenliste (Bestandteil der Beschreibung)

100, 100A-D, Reinigungsvorrichtung
100K, 100', 100"
101 Reinigungsmodul, bauliche Einheit
120, 120', 120", Reinigungsventil
120K
121 Schnellentlüftungsventil
122, 122K Halteanschluss
123 Haltekammer
124, 124", 124K Druckanschluss
126, 126K Druckauslass
127 Einlasskammer
128, 128', 128K Stempel
129 Halteanschlag
130 Dichtlippe
131 Ringaussparung
140, 140", 140K Hochdruckspeicher
142, 142" Speicheranschluss
144 Ladeabzweigung
160 Schaltventil
160.1 Haltestellung
160.2 Lösestellung
164, 164', 164A-D Zuleitungs-Rückschlagventil
170 Hochdruckspeicher-Halteventil
170' Rückschlagventil
172, 172' Halteleitung
173 Speicherabzweigung
174, 174K Speicherleitung
180, 180K Düse
190 Zweites Schaltventil
192 Zuführungsleitung
194 Entlüftungsabzweigung
210 erste Mediumszuleitung
220 zweite Mediumszuleitung
260, 260K Ventilspeicheranordnung
261 Ventilspeichermodul
262 Wechselanschluss
264 Moduldüsenspitze
266 Modulaußenteil
268 Modulinnenteil
270 Modulspeicherdichtung
272 Modulstempel
272H Haltestellung des Modulstempels
272L Lösestellung des Modulstempels
274 Stempellippe
276 Einsatzabschnitt
277' Druckleitung
278 Spitzenpassage
280 Modulgewinde
282 Flanschabschnitt
284 Radialraum
286 Modulanschluss
287' Druckleitung
288 Topfabschnitt
290 Modulvorderseite
292 Passagestutzen
294 Befestigungslöcher
300 Sensor
302 optischer Sensor
304 Umgebungserfassungssensor
310 Abdeckung eines Sensors
320 Dreckpartikel
350 Steuermodul
352 Erste Schaltventil-Steuerleitung
354 Zweite Schaltventil-Steuerleitung
400 Verdichteranordnung
402 Verdichter
404 Lufttrockner
408 Erste Quellenleitung
410 Erster Versorgungsanschluss
420 Tank
422 Pumpe
430 Zweiter Versorgungsanschluss
440, 440' Druckluftspeicher
442 Verdichterzuführung
444 Verdichterauslass
446, 446` Speicherauslass
800 Fahrzeug
900 Druckluftversorgungsanlage
901 Luftfederanlage
910 Pneumatikanlage
920 Reinigungsanlage
922 Scheibenreinigungsanlage
1000 Druckluftsystem
A1 erste Strahlachse
A2 zweite Strahlachse
B Seite des Stempels, die der Einlasskammer zugewandt ist
BS Befüllungsrichtung
D Länge der Druckleitung
FH, FHK Haltekraft
FO, FOK Öffnungskraft
M1 erstes Medium
M1.1 Luft
M2 zweites Medium
M2.1 Wasser
M2.2 Reinigungsmittel
MS, MS1-5 Mediumssequenz
MQ1, MQ1' erste Mediumsquelle
MG2 zweite Mediumsquelle
O Oberfläche
OZ Zielbereich
PH, PHK Haltedruck
PS, PSK Speicherdruck
TM1 Erster Beaufschlagungszeitraum
TM2, TM2` Zweiter Beaufschlagungszeitraum
TW, TW' Wartezeit
X1 Erster Schaltventilanschluss
X2 Zweiter Schaltventilanschluss
X3 Dritter Schaltventilanschluss

## Patentansprüche

1. Reinigungsvorrichtung (100, 100A-D, 100K, 100', 100") zum selektiven Beaufschlagen einer Oberfläche (O) mit einer Mediumssequenz (MS, MS1-5) aus mindestens einem ersten, insbesondere gasförmigen, Medium (M1) und einem zweiten, insbesondere flüssigen, Medium (M2), aufweisend:
- eine Düse (180, 180K), ausgebildet zum Beaufschlagen der Oberfläche (O) mit dem zweiten Medium (M2),
**dadurch gekennzeichnet, dass** die Reinigungsvorrichtung weiter aufweist:
- ein Reinigungsventil (120, 120', 120", 120K) mit einem Halteanschluss (122, 122K), einem Druckanschluss (124, 124', 124K), einem Stempel (128, 128', 272) und einem Druckauslass (126, 126K),
- einen Hochdruckspeicher (140, 140", 140K), ausgebildet zum Speichern des, insbesondere mit einem Speicherdruck (PS, PSK) beaufschlagten, ersten Mediums (M1),
- ein Schaltventil (160), zum selektiven Herstellen einer Verbindung zwischen einer ersten Mediumszuleitung (210) mit einer mit dem Halteanschluss (122) verbundenen Halteleitung (172, 172'), wobei
- der Druckauslass (126, 126K) ausgebildet ist, die Oberfläche (O) mit dem ersten Medium (M1) impulsartig zu beaufschlagen, und
einer als ein Ventilspeichermodul (261) ausgebildeten Ventilspeicheranordnung (260, 260K), welche mindestens das Reinigungsventil (120, 120', 120", 120K) und den Hochdruckspeicher (140, 140", 140K) umfasst,
- das Ventilspeichermodul (261) zweiteilig, aus einem Modulinnenteil (268) und einem Modulaußenteil (266), aufgebaut ist, und/oder
- der Druckauslass (126, 126K) einen Wechselanschluss (262) aufweist zum auswechselbaren Anschluss einer Moduldüsenspitze (264),
- insbesondere zum unmittelbaren Anschluss, vorzugsweise per Aufnahme in einem Einsatzabschnitt (276) des Modulaußenteils (266) oder zum mittelbaren Anschluss, vorzugsweise per Druckleitung (277') einer Moduldüsenspitze (264).

2. Reinigungsvorrichtung (100, 100A-D, 100K, 100', 100") nach Anspruch 1, **dadurch gekennzeichnet, dass** die Reinigungsvorrichtung (100, 100A-D, 100K, 100', 100"), insbesondere durch ein Steuermodul (350), dazu ausgebildet ist, die Oberfläche (O) mit dem ersten Medium (M1) und/oder mit dem zweiten Medium (M2) selektiv, insbesondere einzeln, gleichzeitig oder abwechselnd, zu beaufschlagen.

3. Reinigungsvorrichtung (100, 100A-D, 100K, 100', 100") nach Anspruch 1 oder 2, **dadurch gekennzeichnet, dass** die Reinigungsvorrichtung (100, 100A-D, 100K, 100', 100") ausgebildet ist, die Zusammensetzung und Abfolge der Mediumssequenz (MS, MS1-5) zeitlich, insbesondere abwechselnd und/oder intermittierend, zu steuern.

4. Reinigungsvorrichtung (100, 100A-D, 100K, 100', 100") nach einem der vorherigen Ansprüche, **dadurch gekennzeichnet, dass** das Reinigungsventil (120, 120', 120", 120K) als Schnellentlüftungsventil (121) ausgebildet ist.

5. Reinigungsvorrichtung (100, 100A-D, 100K, 100', 100") nach einem der vorherigen Ansprüche, **dadurch gekennzeichnet, dass** das Reinigungsventil (120, 120', 120", 120K) einen beweglichen Stempel (128, 128', 272), insbesondere zum Auslösen einer impulsartigen Strömung des ersten Mediums (M1), aufweist, wobei der Stempel (128, 128', 128K) über einen am Halteanschluss (122, 122K) anliegenden Haltedruck (PH, PHK) steuerbar ist.

6. Reinigungsvorrichtung (100, 100A-D, 100K, 100', 100") nach Anspruch 4, **dadurch gekennzeichnet, dass** der Stempel (128', 272) einseitig durchlässig ausgebildet ist, insbesondere eine Strömung des ersten Mediums (M1) vom Halteanschluss (122, 122K) zum Druckanschluss (124, 124', 124K) zulässt und in Gegenrichtung sperrt.

7. Reinigungsvorrichtung (100, 100A-D, 100', 100") nach einem der vorherigen Ansprüche, **dadurch gekennzeichnet, dass** der Hochdruckspeicher (140, 140", 140K) mit der Halteleitung (172, 172') verbunden ist, insbesondere über eine Speicherabzweigung (173) und eine Speicherleitung (174).

8. Reinigungsvorrichtung (100, 100A-D, 100', 100") nach Anspruch 7, **dadurch gekennzeichnet, dass** ein Hochdruckspeicher-Halteventil (170) in der Speicherleitung (174) angeordnet ist, wobei das Hochdruckspeicher-Halteventil (170) insbesondere als gegen eine Befüllungsrichtung (BS) des Hochdruckspeichers (140, 140") sperrendes Rückschlagventil (170') ausgebildet ist.

9. Reinigungsvorrichtung (100, 100A-D, 100K, 100', 100") nach einem der vorherigen Ansprüche, **dadurch gekennzeichnet, dass** der Druckauslass (126) ausgebildet ist, das erste Medium (M1) praktisch entlang einer ersten Strahlachse (A1) auf die Oberfläche (O) zu leiten.

10. Reinigungsvorrichtung (100, 100A-D, 100K, 100', 100") nach einem der vorherigen Ansprüche, **dadurch gekennzeichnet, dass** die Düse (180, 180K) ausgebildet ist, das zweite Medium (M2) praktisch entlang einer zweiten Strahlachse (A2) auf die Oberfläche (O) zu leiten.

11. Reinigungsvorrichtung (100, 100A-D, 100K, 100', 100") nach Anspruch 10, **dadurch gekennzeichnet, dass** sich erste Strahlachse (A1) und die zweite Strahlachse (A2) auf der Oberfläche (O) in einem Zielbereich (OZ) schneiden.

12. Reinigungsvorrichtung (100, 100A-D, 100K, 100', 100") nach einem der vorherigen Ansprüche, **dadurch gekennzeichnet, dass** der Hochdruckspeicher (140, 140", 140K) ein Fassungsvermögen von 0 cl bis 20 cl, bevorzugt 1 cl bis 10 cl, besonders bevorzugt 3 cl bis 7 cl aufweist.

13. Reinigungsvorrichtung (100, 100A-D, 100K, 100', 100") nach einem der vorherigen Ansprüche, **dadurch gekennzeichnet, dass** die Reinigungsvorrichtung (100, 100A-D, 100K, 100', 100") als eine bauliche Einheit in Form eines Reinigungsmoduls (101), insbesondere der Hochdruckspeicher (140, 140", 140K) in oder unmittelbar an dem Reinigungsventil (120, 120', 120", 120K) angeordnet ist.

14. Reinigungsvorrichtung (100, 100A-D, 100K, 100', 100") nach einem der vorherigen Ansprüche, **dadurch gekennzeichnet, dass** die Düse (180, 180K) über eine Zuführungsleitung (192) versorgt wird, wobei die Zuführungsleitung (192) über ein zweites Schaltventil (190) mit einer zweiten Mediumszuleitung (220) verbunden ist.

15. Reinigungsvorrichtung (100, 100A-D, 100K, 100', 100") nach einem der Ansprüche 1 bis 14, **gekennzeichnet dadurch, dass** der Hochdruckspeicher (140K) in das Ventilspeichermodul (261) integriert ist.

16. Druckluftsystem (1000) aufweisend:
- mindestens einen Sensor (300), wobei der Sensor (300) oder eine insbesondere transparente Abdeckung (310) des Sensors (300) eine Oberfläche (O) aufweist,
- mindestens eine Reinigungsvorrichtung (100, 100A-D, 100K, 100', 100") nach einem der vorherigen Ansprüche, wobei
- eine erste Mediumsquelle (MQ1) des Druckluftsystems (1000) über eine erste Mediumszuleitung (210) mit der mindestens einen Reinigungsvorrichtung (100, 100A-D, 100K, 100', 100") verbindbar ist, und
- eine zweite Mediumsquelle (MQ2) über eine zweite Mediumszuleitung (220) mit der mindestens einen Reinigungsvorrichtung (100, 100A-D, 100K, 100', 100") verbindbar ist.

17. Druckluftsystem (1000) nach Anspruch 16, **dadurch gekennzeichnet, dass** die erste Mediumsquelle (MQ1) einem anderen Primärzweck dient, insbesondere der Versorgung einer Luftfederanlage (901) oder dergleichen Pneumatikanlage (910).

18. Druckluftsystem (1000) nach Anspruch 16 oder 17, **dadurch gekennzeichnet, dass** die zweite Mediumsquelle (MQ2) einem anderen Primärzweck dient, insbesondere der Versorgung einer Scheibenreinigungsanlage (922) oder dergleichen Reinigungsanlage (920).

19. Druckluftsystem (1000) nach einem der Ansprüche 16 bis 18, **dadurch gekennzeichnet, dass** der Sensor (300) ein optischer Sensor (302), insbesondere ein Umgebungserfassungssensor (304) ist.

20. Druckluftsystem (1000) nach einem der Ansprüche 16 bis 19, **dadurch gekennzeichnet, dass** die erste Mediumsquelle (MQ1) eine Verdichteranordnung (400) und/oder einen Druckluftspeicher (440) aufweist, insbesondere die Verdichteranordnung (400) in dem Druckluftspeicher (440) angeordnet ist.

21. Druckluftsystem (1000) nach einem der Ansprüche 16 bis 20, **dadurch gekennzeichnet, dass** das Druckluftsystem (1000) mindestens ein Zuleitungs-Rückschlagventil (164, 164', 164A-D), insbesondere in der ersten Mediumszuleitung (210) und/oder einer ersten Quellenleitung (408), aufweist.

22. Reinigungsverfahren zum Reinigen einer Oberfläche (O), mit einer Reinigungsvorrichtung (100, 100A-D, 100K, 100', 100") nach einem der Ansprüche 1 bis 15, zum selektiven Beaufschlagen einer Oberfläche (O) mit einer Mediumssequenz (MS, MS1-5) aus mindestens einem ersten, insbesondere gasförmigen, Medium (M1) und einem zweiten, insbesondere flüssigen, Medium (M2), wobei das Verfahren die Schritte aufweist:
- Aufladen eines Hochdruckspeichers (140, 140") mit einem ersten Medium (M1), insbesondere Luft (M1.1);
- Halten eines Speicherdrucks (PS) im Hochdruckspeicher (140, 140", 140K), insbesondere durch Halten eines Haltedrucks (PH, PHK) am Halteanschluss (122, 122K) des Reinigungsventils (120, 120', 120", 120K), insbesondere durch Schalten des Schaltventils (160) in eine Haltestellung (160.1);
- Beaufschlagen der Oberfläche (O) mit einem zweiten Medium (M2), insbesondere Wasser (M2.1) oder einem Reinigungsmittel (M2.2); und/oder
- Beaufschlagen der Oberfläche (O) mit dem ersten Medium (M1, M1.1), insbesondere durch Lösen des Haltedrucks (PH, PHK) am Halteanschluss (122, 122K), insbesondere durch Schalten des Schaltventils (160) in eine Lösestellung (160.2).

23. Reinigungsverfahren nach Anspruch 22, **dadurch gekennzeichnet, dass** das Beaufschlagen der Oberfläche (O) mit dem zweiten Medium (M2, M2.1, M2.2) und das Beaufschlagen der Oberfläche (O) mit dem ersten Medium (M1, M1.1) zeitlich gesteuert, insbesondere abwechselnd und/oder intermittierend, erfolgt.

## Claims

1. Cleaning device (100, 100A-D, 100K, 100', 100") for selectively applying a medium sequence (MS, MS1-5) consisting of at least one first, in particular gaseous, medium (M1) and a second, in particular liquid, medium (M2) to a surface (O), comprising:
- a nozzle (180, 180K) which is designed for applying the second medium (M2) to the surface (O),
**characterized in that** the cleaning device further comprises:
- a cleaning valve (120, 120', 120", 120K) having a holding port (122, 122K), a pressure port (124, 124', 124K), a plunger (128, 128', 272) and a pressure outlet (126, 126K),
- a high-pressure storage reservoir (140, 140", 140K) which is designed to store the first medium (M1) which is applied in particular at a storage pressure (PS, PSK),
- a switching valve (160) for selectively establishing a connection between a first medium supply line (210) and a holding line (172, 172') connected to the holding port (122),
- the pressure outlet (126, 126K) being designed to apply the first medium (M1) to the surface (O) in a pulse-like manner, and
a valve storage arrangement (260, 260K) which is designed as a valve storage module (261) and includes at least the cleaning valve (120, 120', 120", 120K) and the high-pressure storage reservoir (140, 140", 140K),
- the valve storage module (261) being constructed in two parts from a module inner part (268) and a module outer part (266), and/or
- the pressure outlet (126, 126K) comprising an interchangeable port (262) for interchangeably connecting a module nozzle tip (264),
- in particular for directly connecting it, preferably by receiving it in an insert portion (276) of the module outer part (266) or for indirectly connecting it, preferably via a pressure line (277') of a module nozzle tip (264).

2. Cleaning device (100, 100A-D, 100K, 100', 100") according to claim 1, **characterized in that** the cleaning device (100, 100A-D, 100K, 100', 100") is designed, in particular by means of a control module (350), to selectively, in particular individually, simultaneously or alternately apply the first medium (M1) and/or the second medium (M2) to the surface (O).

3. Cleaning device (100, 100A-D, 100K, 100', 100") according to either claim 1 or claim 2, **characterized in that** the cleaning device (100, 100A-D, 100K, 100', 100") is designed to control the composition and sequence of the medium sequence (MS, MS1-5) in time, in particular alternately and/or intermittently.

4. Cleaning device (100, 100A-D, 100K, 100', 100") according to any of the preceding claims, **characterized in that** the cleaning valve (120, 120', 120", 120K) is designed as a quick-acting ventilation valve (121).

5. Cleaning device (100, 100A-D, 100K, 100', 100") according to any of the preceding claims, **characterized in that** the cleaning valve (120, 120', 120", 120K) comprises a movable plunger (128, 128', 272), in particular for triggering a pulse-like flow of the first medium (M1), it being possible for the plunger (128, 128', 128K) to be controlled via a holding pressure (PH, PHK) which rests against the holding port (122, 122K).

6. Cleaning device (100, 100A-D, 100K, 100', 100") according to claim 4, **characterized in that** the plunger (128', 272) is designed to be permeable on one side, in particular allows a flow of the first medium (M1) from the holding port (122, 122K) to the pressure port (124, 124', 124K) and blocks it in the opposite direction.

7. Cleaning device (100, 100A-D, 100', 100") according to any of the preceding claims, **characterized in that** the high-pressure storage reservoir (140, 140", 140K) is connected to the holding line (172, 172'), in particular via a storage branch (173) and a storage line (174).

8. Cleaning device (100, 100A-D, 100', 100") according to claim 7, **characterized in that** a high-pressure storage reservoir-holding valve (170) is arranged in the storage line (174), the high-pressure storage reservoir-holding valve (170) being designed in particular as a non-return valve (170') which blocks against a filling direction (BS) of the high-pressure accumulator (140, 140").

9. Cleaning device (100, 100A-D, 100K, 100', 100") according to any of the preceding claims, **characterized in that** the pressure outlet (126) is designed to guide the first medium (M1) onto the surface (O) practically along a first jet axis (A1).

10. Cleaning device (100, 100A-D, 100K, 100', 100") according to any of the preceding claims, **characterized in that** the nozzle (180, 180K) is designed to guide the second medium (M2) onto the surface (O) practically along a second jet axis (A2).

11. Cleaning device (100, 100A-D, 100K, 100', 100") according to claim 10, **characterized in that** the first jet axis (A1) and the second jet axis (A2) intersect on the surface (O) in a target region (OZ).

12. Cleaning device (100, 100A-D, 100K, 100', 100") according to any of the preceding claims, **characterized in that** the high-pressure storage reservoir (140, 140", 140K) has a capacity of 0 cl to 20 cl, preferably 1 cl to 10 cl, particularly preferably 3 cl to 7 cl.

13. Cleaning device (100, 100A-D, 100K, 100', 100") according to any of the preceding claims, **characterized in that** the cleaning device (100, 100A- D, 100K, 100', 100") as a structural unit in the form of a cleaning module (101), in particular the high-pressure storage reservoir (140, 140", 140K) is arranged in or directly on the cleaning valve (120, 120', 120", 120K).

14. Cleaning device (100, 100A-D, 100K, 100', 100") according to any of the preceding claims, **characterized in that** the nozzle (180, 180K) is supplied via a supply line (192), the supply line (192) being connected to a second medium supply line (220) via a second switching valve (190).

15. Cleaning device (100, 100A-D, 100K, 100', 100") according to any of claims 1 to 14, **characterized in that** the high-pressure storage reservoir (140K) is integrated into the valve storage module (261).

16. Compressed air system (1000) comprising:
- at least one sensor (300), wherein the sensor (300) or an in particular transparent cover (310) of the sensor (300) comprises a surface (O),
- at least one cleaning device (100, 100A-D, 100K, 100', 100") according to any of the preceding claims, wherein
- a first medium source (MQ1) of the compressed air system (1000) can be connected via a first medium supply line (210) to the at least one cleaning device (100, 100A-D, 100K, 100', 100"), and
- a second medium source (MQ2) can be connected via a second medium supply line (220) to the at least one cleaning device (100, 100A-D, 100K, 100', 100").

17. Compressed air system (1000) according to claim 16, **characterized in that** the first medium source (MQ1) is used for a different primary purpose, in particular for supplying an air suspension installation (901) or similar pneumatic installation (910).

18. Compressed air system (1000) according to either claim 16 or claim 17, **characterized in that** the second medium source (MQ2) is used for a different primary purpose, in particular for supplying a pane cleaning installation (922) or similar cleaning installation (920).

19. Compressed air system (1000) according to any of claims 16 to 18, **characterized in that** the sensor (300) is an optical sensor (302), in particular an environment detection sensor (304).

20. Compressed air system (1000) according to any of claims 16 to 19 **characterized in that** the first medium source (MQ1) comprises a compressor arrangement (400) and/or a compressed air storage reservoir (440), in particular the compressor arrangement (400) is arranged in the compressed air storage reservoir (440).

21. Compressed air system (1000) according to any of claims 16 to 20, **characterized in that** the compressed air system (1000) comprises at least one supply non-return valve (164, 164', 164A-D), in particular in the first medium supply line (210) and/or a first source line (408).

22. Cleaning method for cleaning a surface (O) using a cleaning device (100, 100A-D, 100K, 100', 100") according to any of claims 1 to 15, for selectively applying a medium sequence (MS, MS1-5) consisting of at least one first, in particular gaseous, medium (M1) and a second, in particular liquid, medium (M2) to a surface (O), wherein the method comprises the steps of:
- loading a high-pressure storage reservoir (140, 140") with a first medium (M1), in particular air (M1.1);
- holding a storage pressure (PS) in the high-pressure storage reservoir (140, 140", 140K), in particular by holding a holding pressure (PH, PHK) at the holding port (122, 122K) of the cleaning valve (120, 120', 120", 120K), in particular by switching the switching valve (160) into a holding position (160.1);
- applying a second medium (M2), in particular water (M2.1) or a cleaning agent (M2.2), to the surface (O); and/or
- applying the first medium (M1, M1.1) to the surface (O), in particular by releasing the holding pressure (PH, PHK) at the holding port (122, 122K), in particular by switching the switching valve (160) into a release position (160.2).

23. Cleaning method according to claim 22, **characterized in that** the second medium (M2, M2.1, M2.2) is applied to the surface (O) and the first medium (M1, M1.1) is applied to the surface (O) in a time-controlled manner, in particular alternately and/or intermittently.

## Revendications

1. Dispositif de nettoyage (100, 100A-D, 100K, 100', 100") permettant d'exposer sélectivement une surface (O) à l'action d'une séquence de milieux (MS, MS1-5) constituée d'au moins un premier milieu (M1), en particulier gazeux, et d'un second milieu (M2), en particulier liquide, présentant :
- une buse (180, 180K), conçue pour l'exposition de la surface (O) à l'action du second milieu (M2),
**caractérisé en ce que** le dispositif de nettoyage présente en outre :
- une soupape de nettoyage (120, 120', 120", 120K) comportant un raccord de maintien (122, 122K), un raccord de pression (124, 124', 124K), un piston (128, 128', 272) et une sortie de pression (126, 126K),
- un accumulateur haute pression (140, 140", 140K), conçu pour l'accumulation du premier milieu (M1), en particulier exposé à l'action d'une pression d'accumulateur (PS, PSK),
- une soupape de commutation (160), pour l'établissement de manière sélective d'une liaison entre une première conduite d'amenée de milieu (210) et une conduite de maintien (172, 172') reliée au raccord de maintien (122), dans lequel
- la sortie de pression (126, 126K) est conçue pour exposer la surface (O) à l'action du premier milieu (M1) par impulsions, et
un agencement d'accumulateur à soupape (260, 260K) conçu en tant que module d'accumulateur à soupape (261), lequel comprend au moins la soupape de nettoyage (120, 120', 120", 120K) et l'accumulateur haute pression (140, 140", 140K),
- le module d'accumulateur à soupape (261) est construit en deux parties, à partir d'une partie intérieure de module (268) et d'une partie extérieure de module (266), et/ou
- la sortie de pression (126, 126K) présente un raccord de changement (262) pour le raccordement de manière interchangeable d'une pointe de buse de module (264),
- en particulier pour le raccordement direct, de préférence par réception dans une section d'insertion (276) de la partie extérieure de module (266), ou pour le raccordement indirect, de préférence par une conduite de pression (277') d'une pointe de buse de module (264).

2. Dispositif de nettoyage (100, 100A-D, 100K, 100', 100") selon la revendication 1, **caractérisé en ce que** le dispositif de nettoyage (100, 100A-D, 100K, 100', 100") est conçu pour exposer sélectivement, en particulier individuellement, simultanément ou par alternance, la surface (O) à l'action du premier milieu (M1) et/ou du second milieu (M2), en particulier au moyen d'un module de commande (350).

3. Dispositif de nettoyage (100, 100A-D, 100K, 100', 100") selon la revendication 1 ou 2, **caractérisé en ce que** le dispositif de nettoyage (100, 100A-D, 100K, 100', 100") est configuré pour commander la composition et l'ordre de la séquence de milieux (MS, MS1-5) dans le temps, en particulier par alternance et/ou par intermittence.

4. Dispositif de nettoyage (100, 100A-D, 100K, 100', 100") selon l'une des revendications précédentes, **caractérisé en ce que** la soupape de nettoyage (120, 120', 120", 120K) est conçue en tant que soupape de purge rapide (121).

5. Dispositif de nettoyage (100, 100A-D, 100K, 100', 100") selon l'une des revendications précédentes, **caractérisé en ce que** la soupape de nettoyage (120, 120', 120", 120K) présente un piston (128, 128', 272) mobile, en particulier pour le déclenchement d'un écoulement par impulsions du premier milieu (M1), dans lequel le piston (128, 128', 128K) peut être commandé par l'intermédiaire d'une pression de maintien (PH, PHK) se trouvant au niveau du raccord de maintien (122, 122K).

6. Dispositif de nettoyage (100, 100A-D, 100K, 100', 100") selon la revendication 4, **caractérisé en ce que** le piston (128', 272) est conçu de manière à être perméable d'un côté, en particulier il permet un écoulement du premier milieu (M1) du raccord de maintien (122, 122K) au raccord de pression (124, 124', 124K) et le bloque dans le sens opposé.

7. Dispositif de nettoyage (100, 100A-D, 100', 100") selon l'une des revendications précédentes, **caractérisé en ce que** l'accumulateur haute pression (140, 140", 140K) est relié à la conduite de maintien (172, 172'), en particulier par l'intermédiaire d'un embranchement d'accumulateur (173) et d'une conduite d'accumulateur (174).

8. Dispositif de nettoyage (100, 100A-D, 100', 100") selon la revendication 7, **caractérisé en ce qu'**une soupape de maintien d'accumulateur haute pression (170) est disposée dans la conduite d'accumulateur (174), dans lequel la soupape de maintien d'accumulateur haute pression (170) est en particulier conçue en tant que soupape antiretour (170') bloquant un sens de remplissage (BS) de l'accumulateur haute pression (140, 140").

9. Dispositif de nettoyage (100, 100A-D, 100K, 100', 100") selon l'une des revendications précédentes, **caractérisé en ce que** la sortie de pression (126) est conçue pour guider le premier milieu (M1) sur la surface (O) pratiquement le long d'un premier axe de jet (A1).

10. Dispositif de nettoyage (100, 100A-D, 100K, 100', 100") selon l'une des revendications précédentes, **caractérisé en ce que** la buse (180, 180K) est conçue pour guider le second milieu (M2) sur la surface (O) pratiquement le long d'un second axe de jet (A2).

11. Dispositif de nettoyage (100, 100A-D, 100K, 100', 100") selon la revendication 10, **caractérisé en ce que** le premier axe de jet (A1) et le second axe de jet (A2) se coupent sur la surface (O) dans une zone cible (OZ).

12. Dispositif de nettoyage (100, 100A-D, 100K, 100', 100") selon l'une des revendications précédentes, **caractérisé en ce que** l'accumulateur haute pression (140, 140", 140K) présente une capacité allant de 0 cl à 20 cl, de préférence de 1 cl à 10 cl, de manière particulièrement préférée de 3 cl à 7 cl.

13. Dispositif de nettoyage (100, 100A-D, 100K, 100', 100") selon l'une des revendications précédentes, **caractérisé en ce que** le dispositif de nettoyage (100, 100A-D, 100K, 100', 100") en tant qu'unité structurelle sous la forme d'un module de nettoyage (101), en particulier l'accumulateur haute pression (140, 140", 140K) est disposé dans ou directement sur la soupape de nettoyage (120, 120', 120", 120K).

14. Dispositif de nettoyage (100, 100A-D, 100K, 100', 100") selon l'une des revendications précédentes, **caractérisé en ce que** la buse (180, 180K) est alimentée par l'intermédiaire d'une conduite d'acheminement (192), dans lequel la conduite d'acheminement (192) est reliée à une seconde conduite d'amenée de milieu (220) par l'intermédiaire d'une seconde soupape de commutation (190).

15. Dispositif de nettoyage (100, 100A-D, 100K, 100', 100") selon l'une des revendications 1 à 14, **caractérisé en ce que** l'accumulateur haute pression (140K) est intégré dans le module d'accumulateur à soupape (261).

16. Système à air comprimé (1000) présentant :
- au moins un capteur (300), dans lequel le capteur (300) ou un élément de recouvrement (310) en particulier transparent du capteur (300) présente une surface (O),
- au moins un dispositif de nettoyage (100, 100A-D, 100K, 100', 100") selon l'une des revendications précédentes, dans lequel
- une première source de milieu (MQ1) du système à air comprimé (1000) peut être reliée à l'au moins un dispositif de nettoyage (100, 100A-D, 100K, 100', 100") par l'intermédiaire d'une première conduite d'amenée de milieu (210), et
- une seconde source de milieu (MQ2) peut être reliée à l'au moins un dispositif de nettoyage (100, 100A-D, 100K, 100', 100") par l'intermédiaire d'une seconde conduite d'amenée de milieu (220).

17. Système à air comprimé (1000) selon la revendication 16, **caractérisé en ce que** la première source de milieu (MQ1) sert à un autre but primaire, en particulier à l'alimentation d'une installation de suspension pneumatique (901) ou d'une installation pneumatique (910) similaire.

18. Système à air comprimé (1000) selon la revendication 16 ou 17, **caractérisé en ce que** la seconde source de milieu (MQ2) sert à un autre but primaire, en particulier à l'alimentation d'une installation de nettoyage de vitres (922) ou d'une installation de nettoyage (920) similaire.

19. Système à air comprimé (1000) selon l'une des revendications 16 à 18, **caractérisé en ce que** le capteur (300) est un capteur optique (302), en particulier un capteur de détection d'environnement (304).

20. Système à air comprimé (1000) selon l'une des revendications 16 à 19, **caractérisé en ce que** la première source de milieu (MQ1) présente un agencement de compresseur (400) et/ou un accumulateur d'air comprimé (440), en particulier l'agencement de compresseur (400) est disposé dans l'accumulateur d'air comprimé (440).

21. Système à air comprimé (1000) selon l'une des revendications 16 à 20, **caractérisé en ce que** le système à air comprimé (1000) présente au moins une soupape antiretour de conduite d'amenée (164, 164', 164A-D), en particulier dans la première conduite d'amenée de milieu (210) et/ou dans une première conduite de source (408).

22. Procédé de nettoyage permettant de nettoyer une surface (O), comportant un dispositif de nettoyage (100, 100A-D, 100K, 100', 100") selon l'une des revendications 1 à 15, permettant d'exposer sélectivement une surface (O) à l'action d'une séquence de milieux (MS, MS1-5) constituée d'au moins un premier milieu (M1), en particulier gazeux, et d'un second milieu (M2), en particulier liquide, dans lequel le procédé présente les étapes consistant à :
- charger un accumulateur haute pression (140, 140") d'un premier milieu (M1), en particulier d'air (M1.1) ;
- maintenir une pression d'accumulateur (PS) dans l'accumulateur haute pression (140, 140", 140K), en particulier en maintenant une pression de maintien (PH, PHK) au niveau du raccord de maintien (122, 122K) de la soupape de nettoyage (120, 120', 120", 120K), en particulier en commutant la soupape de commutation (160) dans une position de maintien (160.1) ;
- exposer la surface (O) à l'action d'un second milieu (M2), en particulier de l'eau (M2.1) ou d'un agent de nettoyage (M2.2) ; et/ou
- exposer la surface (O) à l'action du premier milieu (M1, M1.1), en particulier en desserrant la pression de maintien (PH, PHK) au niveau du raccord de maintien (122, 122K), en particulier en commutant la soupape de commutation (160) dans une position de desserrage (160.2).

23. Procédé de nettoyage selon la revendication 22, **caractérisé en ce que** l'exposition de la surface (O) à l'action du second milieu (M2, M2.1, M2.2) et l'exposition de la surface (O) à l'action du premier milieu (M1, M1.1) sont effectuées de manière commandée dans le temps, en particulier par alternance et/ou par intermittence.
